(19) Europäisches Patentamt
European Patent Office
Office européen des brevets

(11) **EP 3 724 988 B1**

(12) **EUROPÄISCHE PATENTSCHRIFT**

(45) Veröffentlichungstag und Bekanntmachung des Hinweises auf die Patenterteilung:
**15.06.2022   Patentblatt 2022/24**

(21) Anmeldenummer: **18814819.1**

(22) Anmeldetag: **29.11.2018**

(51) Internationale Patentklassifikation (IPC):
**G01P 3/488** (2006.01)   **H01M 10/42** (2006.01)
**H01M 10/46** (2006.01)   **H02J 7/14** (2006.01)
**F02D 41/00** (2006.01)   **H02P 9/48** (2006.01)

(52) Gemeinsame Patentklassifikation (CPC):
**H02P 9/48; F02D 41/0097; G01P 3/488;**
**H01M 10/425; H01M 10/46; H02J 7/1469;**
H01M 2220/20; H02P 2101/45; H02P 2103/20;
Y02E 60/10; Y02T 10/70

(86) Internationale Anmeldenummer:
**PCT/EP2018/082921**

(87) Internationale Veröffentlichungsnummer:
**WO 2019/115237 (20.06.2019 Gazette 2019/25)**

(54) **VERFAHREN ZUM BETREIBEN EINES LADEREGLERS FÜR EINEN ELEKTRISCHEN SPEICHER IN EINEM KRAFTFAHRZEUG**

METHOD FOR OPERATING A CHARGE REGULATOR FOR AN ELECTRICAL ACCUMULATOR IN A MOTOR VEHICLE

PROCÉDÉ DE FONCTIONNEMENT D'UN RÉGULATEUR DE CHARGE POUR UN ACCUMULATEUR ÉLECTRIQUE DANS UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2017   DE 102017222829**

(43) Veröffentlichungstag der Anmeldung:
**21.10.2020   Patentblatt 2020/43**

(73) Patentinhaber: **Robert Bosch GmbH**
**70442 Stuttgart (DE)**

(72) Erfinder:
• **REINEKE, Bastian**
**71701 Schwieberdingen (DE)**
• **MUELLER, Jonathan**
**70563 Stuttgart (DE)**
• **FISCHER, Wolfgang**
**71272 Renningen (DE)**
• **GRODDE, Stefan**
**70469 Stuttgart (DE)**

(56) Entgegenhaltungen:
DE-A1- 10 150 374     DE-A1-102014 206 173
US-A1- 2009 085 352

## Beschreibung

Die vorliegende Erfindung betrifft ein Verfahren zum Betreiben eines Ladereglers für einen elektrischen Speicher, insbesondere einer Batterie eines Fahrzeugbordnetzes, welcher mit einer an eine Brennkraftmaschine direkt oder übersetzt koppelbaren elektrischen Maschine, umfassend einen Rotor, ein Stator mit zumindest einer Phasensignale erzeugenden Phasenwicklung, mit elektrischer Energie beaufschlagbar ist.

Stand der Technik

Die Drehwinkelposition und die Drehzahl der Kurbelwelle einer Brennkraftmaschine sind wesentliche Eingangsgrößen für viele Funktionen der elektronischen Motorsteuerung. Zu ihrer Ermittlung, können auf einem mit der Kurbelwelle der Brennkraftmaschine rotierenden Körper in gleichen Winkelabständen Markierungen vorgesehen sein. Das Vorbeistreichen einer Markierung infolge der Kurbelwellendrehung, kann durch einen Sensor erfasst und als elektrisches Signal an eine Auswertelektronik weitergegeben werden.

Diese Elektronik bestimmt für die jeweilige Drehwinkelposition der Kurbelwelle, das jeweils hierfür hinterlegte Signal für die Markierung bzw. misst eine Zeitdifferenz zwischen zwei Markierungen und kann aufgrund des bekannten Winkelabstands zweier Markierungen zueinander, die Winkelgeschwindigkeit und daraus die Drehzahl ermitteln. Bei Kraftfahrzeugen, insbesondere Motorrädern, Mopeds oder Krafträdern, können die Markierungen beispielsweise durch Zähne eines metallischen Zahnrads, eines sogenannten Geberrads, bereitgestellt werden, welche durch ihre Bewegung in dem Sensor eine Änderung des Magnetfelds bewirken. Eine Lücke von einigen Zähnen kann als Bezugsmarke zur Erkennung der absoluten Position dienen.

Während bei Pkws zumeist 60-2 Zähne verwendet werden (gleichmäßige Verteilung von 60 Zähnen, wobei zwei ausgespart bleiben), kommt bei Motorbzw. Krafträdern beispielweise auch 36-2, 24-2 oder 12-3 Zähne zum Einsatz. Bei diesem indirekten Prinzip der Drehgeschwindigkeitsbestimmung bzw. Drehwinkelpositionsbestimmung der Kurbelwelle, wird die Auflösung des Drehzahlsignals bzw. die absolute Erfassung der Drehwinkelposition durch die Anzahl der Zähne und durch eine sichere Erkennung der Bezugsmarke bestimmt.

Bei jedem modernen Fahrzeug mit Brennkraftmaschine, ist ein Generator verbaut, der durch die Drehung der Kurbelwelle angetrieben wird und elektrische Signale liefert, die zur Versorgung des Fahrzeugs mit elektrischer Energie und dem Aufladen der Fahrzeugbatterie dienen. Der vorgesehene Betrieb eines Fahrzeugs ohne diesen Generator, ist nicht oder nur für kurze Zeit möglich. Zur Regelung der Batteriespannung wird ein Regler verwendet, durch den, z.B. durch Kurzschließen der Phasen der elektrischen Maschine, die Batteriespannung auf einen Sollwert eingeregelt wird. Der zuvor beschriebene Generator wird typischerweise kumulativ zu den oben beschriebenen Sensoren zur Drehzahlerfassung und zur Erfassung der Drehwinkelposition der Kurbelwelle verwendet. An diesen Systemen ist nachteilig, dass sowohl ein Generator zur Stromversorgung als auch eine Vielzahl an Sensoren notwendig sind, um die Drehzahl bzw. die Drehwinkelposition der Kurbelwelle zu ermitteln.

US 2009/085352 A1 offenbart eine Laderegelung einer Batterie in einem Fahrzeug, wobei ein Ausgangsstrom eines Generators betrieben durch einen Verbrennungsmotor nur in einem voreingestellten Bereich, in dem eine Reibung des Verbrennungsmotors gering ist, einer Batterie zugeführt wird.

DE 10 2014 206173 A1 offenbart eine Bestimmung einer Drehzahl einer Kurbelwelle einer Brennkraftmaschine mittels Auswertung wenigstens eines Signals einer elektrischen Maschine.

DE 101 50 374 A1 offenbart eine Ansteuerung eines von einer Brennkraftmaschine angetriebenen Drehstromgenerators, in einem Kraftfahrzeug.

Ferner ist auch die Nutzung der elektrischen Ausgangsgrößen einer über die Kurbelwelle angetriebenen elektrischen Maschine zur Drehzahlbestimmung aus der EP 0 664 887 B1 bekannt. Hierzu wird eine Phase des Generators als Referenz zur Verfügung gestellt, an welcher eine pulsierende Gleichspannung anliegt. Eine derartige Anordnung kann zudem dafür herangezogen werden, anhand der jeweiligen Phasensignale auch eine Abschätzung der Drehwinkelposition des Rotors der elektrischen Maschine und dadurch auch eine Drehwinkelposition der Kurbelwelle der Brennkraftmaschine zu ermitteln, die jeweils direkt oder übersetzt miteinander gekoppelt sind. Eine entsprechende Spannungsregelung, die die elektrischen Ausgangsgrößen der elektrischen Maschine dauerhaft beeinflusst, wie Sie beispielsweise bei Krafträdern im Rahmen einer Kurzschlussregelung üblich ist, wäre hierbei ungeeignet, da hierdurch die charakteristischen Signale für eine Bestimmung der Drehzahl bzw. der Drehwinkelposition der Welle zerstört werden und in Folge eine Ermittlung der Drehzahl oder sonstiger Maschinengrößen nicht mehr möglich ist. Zudem ist eine hochaufgelöste Drehzahlbestimmung bzw. eine hochaufgelöste Bestimmung der Drehwinkelposition der Kurbelwelle bzw. des Rotors der elektrischen Maschine hierbei nicht realisiert.

Es wäre daher wünschenswert eine Möglichkeit einer Regelung der Batteriespannung anzugeben, ohne dass die Ermittlung der Drehwinkelposition oder die Drehzahl des Rotors der elektrischen Maschine, die aus den Phasensignalen der elektrischen Maschine gewonnen werden, beeinträchtigt werden.

Offenbarung der Erfindung

Die Erfindung wird durch die Merkmale der unabhängigen Ansprüche definiert. Vorteilhafte Ausgestaltungen sind Gegenstand der Unteransprüche.

Vorteile der Erfindung

Bei einem Verfahren zum Betreiben eines Ladereglers für einen elektrischen Speicher, insbesondere einer Batterie eines Fahrzeugbordnetzes, welcher mit einer an eine Brennkraftmaschine direkt oder übersetzt koppelbaren oder gekoppelten elektrischen Maschine, umfassend einen Rotor, einen Stator mit zumindest einer Phasensignale erzeugenden Phasenwicklung, mit elektrischer Energie beaufschlagbar ist, wird zumindest ein Wert, der jeweils wenigsten einmal pro Drehung des Rotors auftritt und mit zumindest einer aufsteigenden Flanke des Phasensignals oder abfallenden Flanke des Phasensignals assoziiert ist, erfasst. Der Wert kann grundsätzlich auch mit einem Nulldurchgang zumindest einer der Phasensignale assoziiert sein. Durch ein Erfassen dieses Wertes, der mit einer aufsteigenden Flanke des Phasensignals oder eine abfallenden Flanke des Phasensignals assoziiert ist, bzw. anhand dieses Wertes eben eine entsprechende Phase zeitlich lokalisiert werden kann, kann auf eine Drehwinkelposition des Rotors der elektrischen Maschine bzw. dessen Drehzahl zurückgeschlossen werden. Durch die feste Kopplung der elektrischen Maschine mit der Kurbelwelle lässt sich somit auch die Kurbelwellenposition aus der Drehwinkellage bzw. die Drehzahl der Kurbelwelle bestimmen. Die exakte Drehwinkellage des Rotors ist aus einer unbelasteten elektrischen Maschine direkt aus der Leerlaufspannung der elektrischen Maschine ablesbar, da die relative Phasenlage der Leerlaufspannung mit der Drehwinkellage des Rotors übereinstimmt. Bei einer belasteten Maschine ist die exakte Drehwinkellage des Rotors durch zusätzliche Berücksichtigung des Polradwinkels ermittelbar.

Bei Erreichen oder Überschreiben eines Sollwerts für den elektrischen Speicher, insbesondere einer Sollspannung des elektrischen Speichers, wird der Laderegler nun derart angesteuert, dass nach dem Auftreten des zumindest einen Werts ein Stromfluss von der elektrischen Maschine in den elektrischen Speicher unterbunden oder freigegeben wird. Um die Erfassung von Maschinenparametern wie beispielweise der charakteristischen Signale der Phasenspannung bzw. der Phasensignale durch eine Spannungsregelung durch den Laderegler nicht nachhaltig zu stören, wird nach Erreichen oder Überschreiten eines Sollwertes des elektrischen Speichers, welcher einen Regelbedarf anzeigt, und nach dem Auftreten des zumindest einen Werts, der Laderegler derart angesteuert, dass erst nach dem Auftreten des für die Ermittlung der Drehwinkellage bzw. der Drehzahl erforderlichen charakteristischen Signale aus dem Phasensignal, die elektrische Maschine hinsichtlich einer Spannungsregelung für den elektrischen Speicher angesteuert wird. Hierdurch wird verhindert, dass die charakteristischen Signale die für eine Ermittlung der Drehzahl bzw. der Drehwinkellage des Rotors erforderlich sind, durch die Spannungsregelung des Speichers nachhaltig beeinträchtigt werden, wodurch mitunter in Zeitbereichen einer Regelung eine Ermittlung der charakteristischen Signale unmöglich gemacht werden kann.

Auf diese Weise lässt sich auf eine geschickte Art die Spannungsregelung von einer Ermittlung der charakteristischen Werte des Phasensignals, welche mit aufsteigenden und abfallenden Flanken des Phasensignals assoziiert werden, zeitlich trennen, wodurch sowohl eine Spannungsregelung als auch eine Ermittlung von Sekundärgrößen, wie der Drehwinkellage des Rotors als auch der Drehzahl des Rotors, woraus durch die direkte Kopplung mit der Brennkraftmaschine auch die Drehzahl der Kurbelwelle sowie die Drehwinkelposition der Kurbelwelle ermittelbar sind welche wiederum wichtige Ausgangsgrößen für die Steuerung der Brennkraftmaschine sind, gewonnen werden.

In einer weiteren bevorzugten Ausführungsform der Erfindung wird der Stromfluss von der elektrischen Maschine in den elektrischen Speicher durch den Laderegler solange unterbunden, bis ein weiterer Sollwert des elektrischen Speichers erreicht oder unterschritten wird. Durch die Vorgabe eines weiteren Sollwerts des elektrischen Speichers, der vorzugsweise ein Sollwert der Batteriespannung ist, kann entsprechend ein Sollwertband vorgegeben werden, innerhalb dem eine Laderegelung des elektrischen Speichers durch den Laderegler vorgesehen ist. Es ist ferner bevorzugt, dass auch der erste Sollwert ein Sollwert der Spannung des Speichers ist.

In einer weiteren bevorzugten Ausgestaltung der Erfindung ist vorgesehen, dass der erste Sollwert und/oder der weitere Sollwert des elektrischen Speichers abhängig zur Drehzahl der elektrischen Maschine vorgegeben wird bzw. werden kann. Durch die Vorgabe von Maschinenparametern für die Einstellung der Sollwerte für den elektrischen Speicher kann auf besonders einfache Weise die in der elektrischen Maschine zur Verfügung stehende Energie, die von der Drehzahl abhängt, für den Ladevorgang berücksichtigt werden. Zudem kann verhindert werden, dass im Falle einer zu niedrigen Drehzahl der elektrischen Maschine und damit der Brennkraftmaschine durch eine etwaige Ladeanforderung die Brennkraftmaschine durch die elektrische Maschine zu stark mit einem Bremsmoment beaufschlagt wird, so dass der Betrieb der Brennkraftmaschine zum Erliegen kommt.

In einer weiteren bevorzugten Ausführungsform werden der erste Sollwert und/oder der weitere Sollwert des elektrischen Speichers abhängig von zumindest einem Arbeitspunkt der Brennkraftmaschine vorgegeben. Eine derartige Regelung ist vorteilhaft, da z. B. bei unterschiedlichen Lasten der Brennkraftmaschine bzw. aus dem Mischungsverhältnis von Kraftstoff zur Verbrennungsluft, aus dem die jeweiligen Arbeitspunkte der Brennkraftmaschine bestimmt werden können, eine entsprechende Regelung vorgenommen werden kann, um beispielweise für den Fall, dass die Brennkraftmaschine unter Last betrieben wird, nicht noch eine zusätzliche Belastung durch den elektrischen, den Speicher ladenden Generator, erfolgt. Bei Brennkraftmaschinen, insbesondere bei den Brennkraftmaschinen für Zweiradanwendungen erfolgt die Einspritzung von Kraftstoff in der Regel über eine Saugrohreinspritzung bzw. eine Direkteinspritzung mittels eines Ventils, welches direkt mit der Batteriespannung betrieben wird. Somit hängt der Einspritzvorgang von der Batteriespannung ab, die zum Zeitpunkt der Ansteuerung des Einspritzventils am Ventil anliegt. Vorteilhafterweise wird der Spannungsregler zum Zeitpunkt der Einspritzung nun derart beaufschlagt, dass entweder mit ausreichendem Zeitvorlauf zum Stellsignal keine Änderung der Laderegelung erfolgt oder es wird weiter bevorzugt die Batteriespannung für den Zeitpunkt der Ansteuerung des Einspritzventils auf einen möglichst konstanten Wert eingeregelt, wobei der Beginn der Einregelung einer konstanten Spannung vorzugsweise vor dem Ansteuerungsvorgang des Einspritzventils liegt.

In einer weiteren bevorzugten Ausführungsform wird in Zeitbereichen, in denen die Zündung in zumindest einem der Zylinder erfolgt bzw. im Zeitraum während die Zündspulen für die Zündung entsprechend geladen werden, der Spannungsregler derart beaufschlagt, dass der elektrische Speicher durchgehend weiter geladen wird, um eine optimale Zündung zu gewährleisten.

In einer weiteren bevorzugten Ausgestaltung wird das Unterbinden des Stromflusses von der elektrischen Maschine in den elektrischen Speicher durch Kurzschließen zumindest einer der Phasenwicklungen oder durch Stromfreistellen zumindest einer der Phasenwicklungen ohne Last bewirkt. Die Spannungsregelung mittels Kurzschlusses zumindest einer der Phasenwicklungen der elektrischen Maschine, ist vorteilhaft, dass diese einfach und besonders wirksam erfolgen kann. Ein Stromfreistellen der elektrischen Maschine ohne Last hat den Vorteil, dass mittels einer derartigen Regelung beim Trennen des elektrischen Speichers vom Generator keine Verlustleistung erzeugt wird. Hierbei sollte darauf geachtet werden, dass die Leerlaufspannung der elektrischen Maschine einen zulässigen Höchstwert nicht überschreitet. Dies kann bevorzugt durch Maschinenauslegung der elektrischen Maschine erfolgen. Grundsätzlich ist es auch möglich, die am Generator anliegende Leerlaufspannung mittels eines zuschaltbaren Verbrauchers auf einen Höchstwert, insbesondere 60 V, zu begrenzen.

In einer weiteren bevorzugten Ausgestaltung der Erfindung wird das Unterbinden des Stromflusses von der elektrischen Maschine in den elektrischen Speicher abhängig von zumindest einer Drehwinkellage des Rotors der elektrischen Maschine durchgeführt. Durch Kenntnis der absoluten Kurbelwelleninformation kann der Laderegler vorteilhafterweise in gewissen Kurbelwellenbereichen ein Ausregeln der elektrischen Maschine bzw. ein Kurzschließen der Phasenspannungen verhindern. Bevorzugt wird der Laderegler in einem konstanten Zustand, Laden der Batterie oder Spannungsbegrenzung, insbesondere durch Kurzschluss, gehalten. Damit können Funktionen, die insbesondere ein hochaufgelöste Drehzahl in gewisse Kurbelwellenbereiche benötigen, hierzu gehören insbesondere die Einspritzung bzw. die Zündung der Brennkraftmaschine, eine noch bessere Qualität der hochaufgelösten Drehzahl zur Verfügung gestellt werden. Dies ist möglich, da ansonsten die Phasensignale, auf deren Grundlage die Drehzahl bzw. die Drehwinkellage des Rotors der elektrischen Maschine und hieraus durch die direkte Kopplung an den Brennkraftmaschine auch die Drehwinkellage der Kurbellwelle ermittelt wird, entsprechend beeinträchtigt wären.

Erfindungsgemäß wird der Stromfluss nach Auftreten des zumindest einen Werts so lange unterbunden, bis zumindest ein weiterer Wert, der mit einer folgenden aufsteigenden Flanke des Phasensignals oder abfallenden Flanke des Phasensignals assoziiert ist, erkannt wird. Hierbei ist von Vorteil, dass das Erkennen eines ersten Werts der mit einer aufsteigenden Flanke des Phasensignals oder einer abfallenden Flanke des Phasensignals assoziiert ist, ein entsprechender Trigger erfolgen kann, durch den die Bestimmung der Drehwinkellage bzw. der Drehzahl des Rotors der elektrischen Maschine ermittelt wird. Hierbei kann es weiter bevorzugt sein, den zumindest einen weiteren Wert mit einer unmittelbar folgenden aufsteigenden Flanke des Phasensignals oder abfallenden Flanke des Phasensignals im Verhältnis zum zumindest ersten Wert zu koppeln, da hierdurch sowohl die aufsteigende Flanke als auch die absteigende Flanke mittels des zumindest einen ersten und des zumindest einen weiteren Wertes sicher erkannt werden können, wodurch sicher eine entsprechende Laderegelung durch den Laderegler erfolgen kann, aber auch keine Beeinträchtigung einer Flankenerkennung bewirkt wird.

In einer weiteren bevorzugten Ausgestaltung des Verfahrens wird ein Schaltvorgang zum Unterbinden oder Freigeben des Stromflusses (I) eingeleitet, wenn zumindest ein zeitlicher Mindestabstand ($T_{min}$) zu zumindest einem Wert ($W_{Uu}$, $W_{Ud}$, $W_{Vu}$, $W_{Vd}$, $W_{Wu}$, $W_{Wd}$), der mit einer aufsteigenden Flanke ($Fl_{Uu}$, $Fl_{Vu}$, $Fl_{Wu}$) des Phasensignals ($Uu$, $Uv$, $Uw$, $I_U$, $I_V$, $I_W$) oder abfallenden Flanke ($Fl_{Ud}$, $Fl_{Vd}$, $Fl_{Wd}$) des Phasensignals ($Uu$, $Uv$, $Uw$, $I_U$, $I_V$, $I_W$) assoziiert ist, besteht. Durch die Einführung eines zeitlichen Mindestabstands zur nächstfolgenden Flanke kann gewährleistet werden, dass sich das Gesamtsystem zum Zeitpunkt des Messeingriffs nicht mehr in einem Transienten, sondern in einem stationären Zustand befindet, wodurch die Messung der Flanken und hieraus die Ermittlung der Drehwinkellage des Rotors bzw. dessen Drehzahl mit einer noch höherer Präzision ermittelbar ist. Typische zeitliche Mindestabstände bewegen sich in einem Zeitintervall von ca. 100 µs bis 1 ms.

In einer weiteren bevorzugten Ausführungsform wird ein Schaltvorgang zum Unterbinden oder Freigeben des Stromflusses zeitverzögert nach Erkennen eines Werts, der mit einer aufsteigenden Flanke des Phasensignals oder abfallenden Flanke des Phasensignals assoziiert ist, erfolgt. Hierbei ist vorteilhaft, dass Zeitverzögerung dazu genutzt werden kann, um eine Plausibilisierung der Werte Detektion vorzunehmen. Hierdurch können Artefakte im Signal, wie z.B. das sog. Signal-Prellen ausgeschlossen werden. Die Zeitverzögerung kann ggf. mit der Drehzahl variiert werden, um ausreichend Rechenzeit zu gewährleisten. Typische zeitliche Verzögerungen bewegen sich in einem Zeitintervall von ca. 100 µs bis 1 ms.

In einer weiteren bevorzugten Ausführungsform wird in einem ersten Modus das Auftreten eines Werts, der mit einer aufsteigenden Flanke des Phasensignals oder abfallenden Flanke des Phasensignals assoziiert ist, erkannt, wobei nach Erkennen des Wertes aus dem ersten Modus in einen weiteren Modus gewechselt wird, in dem ein Unterbinden oder Freigeben des Stromflusses (I) eingeleitet wird. Ein direktes Springen von dem ersten Modus in den weiteren Modus, sog. Interrupt, bietet den Vorteil, dass eine möglichst Flankensynchrones Schalten ermöglicht wird. Damit ist die Einschwingzeit zur nächsten Flanke sicher gewährleistet und gleichzeitig die Implementierung in einer Recheneinheit sehr recheneffizient.

In einer weiteren bevorzugten Ausführungsform wird der Stromfluss nach Auftreten des zumindest einen Werts zeitlich getaktet, vorzugsweise mittels Pulsweitenmodulation getaktet, unterbunden. Eine getaktete Regelung des Ladereglers ist vorteilhaft, da durch eine entsprechende Taktung einer Zielspannung des elektrischen Speichers sicher einstellbar ist und durch entsprechende Positionierung der Takte zwischen den Triggerwerten, die jeweils mit aufsteigenden bzw. absteigenden Flanken des Phasensignals assoziiert sind, positioniert werden können, wodurch einerseits eine sichere Laderegelung und andererseits eine exakte Erkennung der Flanken und hieraus eine sichere Ermittlung der Drehzahl bzw. der Drehwinkellage des Rotors stets gewährleistet ist.

In einer noch weiteren bevorzugten Ausgestaltung wird die zeitlich Taktung, vorzugsweise der Pulsweiten der Regelungssignale und/oder deren zeitlichen Anfänge und Endpunkte, die für ein Unterbinden des Stromflusses zwischen der elektrischen Maschine und dem Speicher zuständig sind, derart gewählt, dass die Batteriespannung des elektrischen Speichers zwischen dem ersten Sollwert und dem weiteren Sollwert liegt, weiter vorzugsweise einen konstanten Wert annimmt. Durch eine entsprechende Wahl der Taktfrequenz die typischerweise 10, 20 oder 100 kHz beträgt, und einer Wahl der jeweiligen Pulsbreiten und/oder deren zeitlichen Anfängen und Endpunkten des Regelungssignals, insbesondere eines Signals einer Pulsweitenmodulation (PWM) kann die Betriebsspannung des elektrischen Speichers nahezu beliebig eingestellt werden. Andererseits kann die Lage der Pulse derart gewählt werden, dass keine zeitliche Überlappung mit den charakteristischen Werten des Phasensignals, die für eine Ermittlung der jeweiligen aufsteigenden und abfallenden Flanken des Phasensignals erforderlich sind, beeinträchtigt wird. Im Übrigen ist die PWM-Zeitperiode viel kleiner, als die Zeitkonstante der elektrischen Maschine. Damit ist der Zeitpunkt des Schaltens in Relation zur Ermittlung der jeweiligen Werte nicht mehr von großer Bedeutung und es muss keine Beachtung des Phasensignals für die Schaltvorgänge erfolgen.

In einer weiteren bevorzugten Ausgestaltung der Erfindung wird das zumindest eine Phasensignal der elektrischen Maschine mittels einer elektronischen Schalinsbesondere einem Motorsteuergerät verarbeitet. Durch eine entsprechende externe Verarbeitung der Phasensignale bzw. der damit verbundenen Werte und assoziierten aufsteigenden Flanken und absteigenden Flanken sowie einer Regelung, insbesondere einer Laderegelung des elektrischen Speichers in einem Motorsteuergerät kann auf zusätzliche Steuerkomponenten verzichtet werden, da das Motorsteuergerät ohnehin vorhanden ist und auch für diesen Einsatzzweck grundsätzlich nutzbar ist. Dies ist vorteilhaft, da hierdurch eine entsprechende Regelarchitektur vereinfacht werden kann, wodurch zusätzlich Kosten eingespart werden können.

Grundsätzlich versteht sich, dass durch das zuvor beschriebene Verfahren direkt aus den internen Signalen der elektrischen Maschine eine hochaufgelöste Drehwinkelposition bzw. Drehzahl des Rotors der elektrischen Maschine und hiermit auch der Kurbelwelle der Brennkraftmaschine ermittelbar ist, wodurch auch auf ein entsprechendes Geberrad zur Ermittlung der Drehwinkelposition bzw. der Drehzahl und der hiermit verbundenen Sensorik verzichtet werden kann. Eine Ermittlung der Drehwinkelposition bzw. der Drehzahl des Rotors ist im laufenden Betrieb stets möglich, da eine entsprechende Laderegelung des elektrischen Speichers zeitlich von der Ermittlung der Flanken des Phasensignals, welche für eine Ermittlung der Drehwinkelposition bzw. der Drehzahl erforderlich sind, entkoppelt sind. Somit lässt sich im laufenden Betrieb sowohl die Ermittlung einer hochgenauen Drehzahl und einer Drehwinkelposition des Rotors und damit der Kurbelwelle als auch eine entsprechende Spannungsregelung des elektrischen Speichers ausschließlich unter Heranziehung der Phasensignale der elektrischen Maschine gewährleisten. Hierdurch können Kosten eingespart werden, was insbesondere in Bezug auf kostengünstigere Mopeds bzw. Leichtkrafträder von Vorteil ist. Zudem können Steuerfunktionen, wie z.B. die Positionsberechnung der Einspritzung, Momentenberechnung bzw. Lernfunktionen zum genauen Bestimmen der OT-Lage und dergleichen deutlich verbessert werden.

Ferner versteht sich, dass die Phasensignale grundsätzlich auf verschiedene Weise gewonnen werden können. Möglich ist beispielsweise eine Betrachtung der Phasenspannung gegeneinander, eine Betrachtung der Phasenspannung über die Dioden eines angeschlossenen Gleichrichters gegen dessen Potential der Ausgangsklemmen, sofern der Stator der elektrischen Maschine in Sternschaltung mit abgreifbarem Sternpunkt ist, eine Betrachtung der Ausgangsspannung der Stränge gegen den Sternpunkt oder eine vergleichbare Auswertung der Phasenströme.

In einer weiteren bevorzugten Ausführungsform des Verfahrens wird die Drehwinkelposition der Kurbelwelle zur Steuerung der Brennkraftmaschine verwendet. Eine Erfassung und Verarbeitung der Phasensignale der elektrischen Maschine durch das Motorsteuergerät und eine entsprechende Ermittlung der Drehwinkelposition der Kurbelwelle aus der Drehwinkellage des Rotors und einem etwaigen Winkelversatz, gegeben durch den Polradwinkel, kann entsprechend zur Steuerung des Zündzeitpunkt bzw. des Moments der Brennkraftmaschine im Steuergerät der Brennkraftmaschine herangezogen werden. Somit kann eine Laderegelung der Batterie, eine Steuerung der Brennkraftmaschine und eine verbesserte Ermittlung der Drehwinkellage bzw. der Drehzahl der Kurbelwelle im Motorsteuergerät zusammengefasst werden, wodurch sich weiter Synergieeffekte ergeben. Hierfür weist die verwendete Recheneinheit, die vorzugsweise als Motorsteuergerät für die Brennkraftmaschine ausgebildet ist, eine entsprechende integrierte Schaltung und/oder ein auf einem Speicher gespeichertes Computerprogramm auf, die bzw. das zur Durchführung der zuvor beschriebenen Verfahrensschritte eingerichtet ist.

Die Implementierung des Verfahrens in Form eines Computerprogramms, das vorzugsweise auf einem Datenträger, insbesondere einem Speicher in Form von Software gespeichert ist, und in der Recheneinheit zur Ausführung des Verfahrens zur Verfügung steht bzw. das Vorsehen einer integrierten Schaltung, insbesondere eines ASIC, ist vorteilhaft, da dies besonders geringe Kosten verursacht, insbesondere dann, wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie sie vielfach aus dem Stand der Technik bekannt sind.

Weitere Vorteile und Ausgestaltungen der Erfindung ergeben sich aus der Beschreibung und den beiliegenden Zeichnungen.

Kurze Beschreibung der Zeichnung(en)

Figur 1
zeigt schematisch ein Geberrad mit Sensor, insbesondere zur Drehzahlbestimmung gemäß dem Stand der Technik;

Figuren 2a bis c
zeigen eine schematische Darstellung einer an eine Brennkraftmaschine gekoppelten elektrischen Maschine (a, b), und die dazugehörigen Signalverläufe (c);

Figur 3
zeigt schematisch eine elektrische Maschine, mit den entsprechenden zugehörigen Phasensignalen;

Figur 4a und 4b
zeigen mögliche Spannungsverläufe der Phasen einer dreiphasigen elektrischen Maschine;

Figur 5a und 5b
zeigen ein einphasiges vereinfachtes Ersatzschaltbild einer elektrischen Maschine (a), sowie das dazugehörige Zeigerdiagramm der Phasenspannungsvektoren (b);

Figur 6a - 6f
zeigt sechs verschiedene Ausführungsformen von Reglerschaltungen, die einem Gleichrichter einer elektrischen Maschine nachgelagert sind und zur Regelung der Batteriespannung eingerichtet sind;

Figur 7a und b
zeigt den Verlauf eines Phasensignals mit einem Regeleingriff gemäß einem ersten und einem alternativen zweiten Ausführungsbeispiel des Verfahrens;

Figur 8a und 8b
zeigt den Verlauf eines Phasensignals mit einem Regeleingriff gemäß einem weiteren und einem alternativen weiteren Ausführungsbeispiel des Verfahrens; und

Figur 9
zeigt den Verlauf eines Phasensignals mit einem zeitlich getakteten Reglereingriff gemäß einem noch weiteren Ausführungsbeispiel des Verfahrens.

Ausführungsform(en) der Erfindung

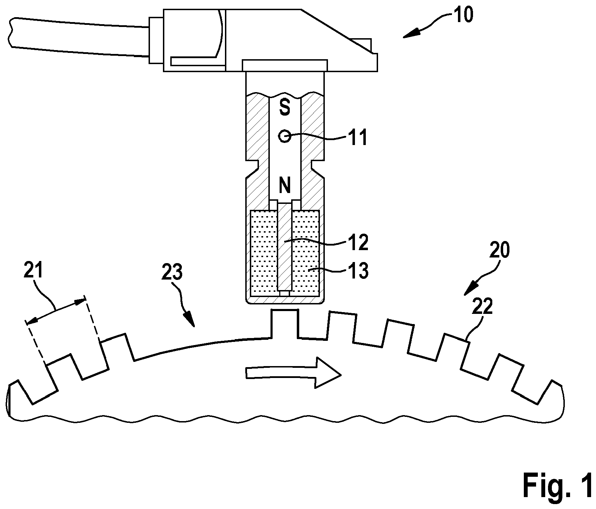

In Figur 1 sind schematisch ein Geberrad 20 und ein zugehöriger induktiver Sensor 10 dargestellt, wie sie im Stand der Technik zur Drehzahlbestimmung bzw. zur näherungsweisen Ermittlung der Drehwinkelposition der Kurbelwelle benutzt werden. Das Geberrad 20 ist dabei fest mit einer Kurbelwelle einer Brennkraftmaschine verbunden und der Sensor 10 ist ortsfest an einer geeigneten Stelle angebracht.

Das Geberrad 20, üblicherweise aus einem ferromagnetischen Material, weist Zähne 22 auf, die an der Außenseite mit einem Abstand 21 zwischen zwei Zähnen 22 angeordnet sind. An einer Stelle auf der Außenseite weist das Geberrad 20 eine Lücke 23 in der Länge einer vorbestimmten Anzahl von Zähnen auf. Diese Lücke 23 dient als Bezugsmarke zur Erkennung einer absoluten Position des Geberrads 20.

Der Sensor 10 weist einen Stabmagnet 11 auf, an welchem ein weichmagnetischer Polstift 12 angebracht ist. Der Polstift 12 wiederum ist von einer Induktionsspule 13 umgeben. Bei Rotation des Geberrads laufen abwechselnd Zähne 22 und zwischen jeweils zwei Zähnen liegende Leerräume an der Induktionsspule 13 des Sensors 10 vorbei. Da das Geberrad und somit auch die Zähne 22 aus einem ferromagnetischen Material sind, wird bei der Rotation in der Spule ein Signal induziert, womit zwischen einem Zahn 22 und einem Luftspalt unterschieden werden kann.

Durch Korrelation einer Zeitdifferenz zwischen zwei Zähnen mit einem Winkel, den diese zwei Zähne einschließen, können die Winkelgeschwindigkeit bzw. die Drehzahl und darüber hinaus auch die entsprechende Winkelposition der Kurbelwelle näherungsweise berechnet werden.

An der Lücke 23 weist das induzierte Signal in der Induktionsspule einen anderen Verlauf auf, als bei den ansonsten sich mit Leerräumen abwechselnden Zähnen 22. Auf diese Art ist eine absolute Positionsmarke, jedoch nur in Bezug auf eine volle Kurbelwellenumdrehung, möglich.

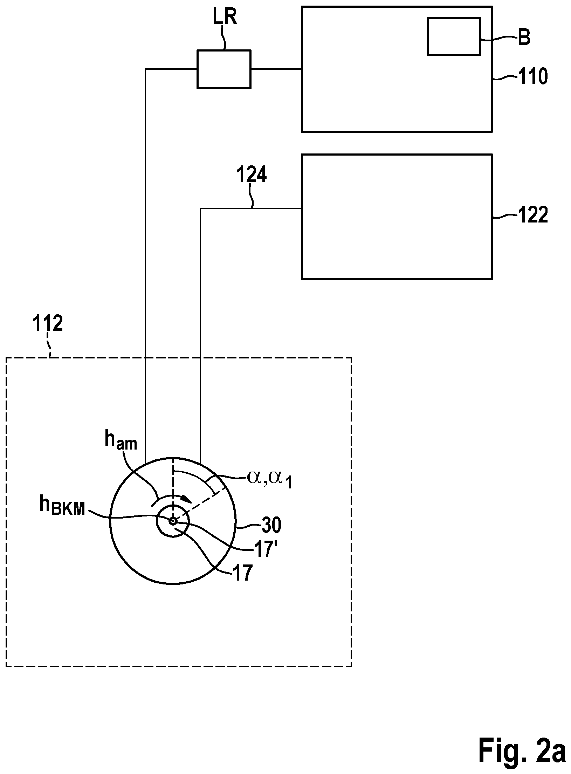

In Figur 2a ist eine Brennkraftmaschine 112 abgebildet, an die direkt oder übersetzt gekoppelt eine elektrische Maschine 30 angebunden ist, wobei die elektrische Maschine 30 durch die Kurbelwelle 17' der Brennkraftmaschine 112 angetrieben wird. Somit weist die Drehzahl $n_{Gen}$ der elektrischen Maschine 130 und die Drehzahl $n_{BKM}$ der Kurbelwelle 17' sowie die Winkelposition $\alpha_1$ des Rotors der elektrischen Maschine 30 und die Drehwinkelposition $\alpha$ der Kurbelwelle 17' ein festes Verhältnis zueinander auf. Der elektrischen Maschine 30 ist zudem ein Laderegler LR zugeordnet, der die Batterie B innerhalb des Bordnetzes 110, entsprechend der noch verbleibenden Kapazität der Batterie B, mit Energie versorgt. Des Weiteren ist eine Recheneinheit, insbesondere ein Motorsteuergerät 122 vorgesehen, das Daten über eine Kommunikationsverbindung 124 mit der elektrischen Maschine 30 bzw. mit der Brennkraftmaschine 112 austauscht und dazu eingerichtet ist, die Brennkraftmaschine 112 und die elektrische Maschine 30 entsprechend anzusteuern.

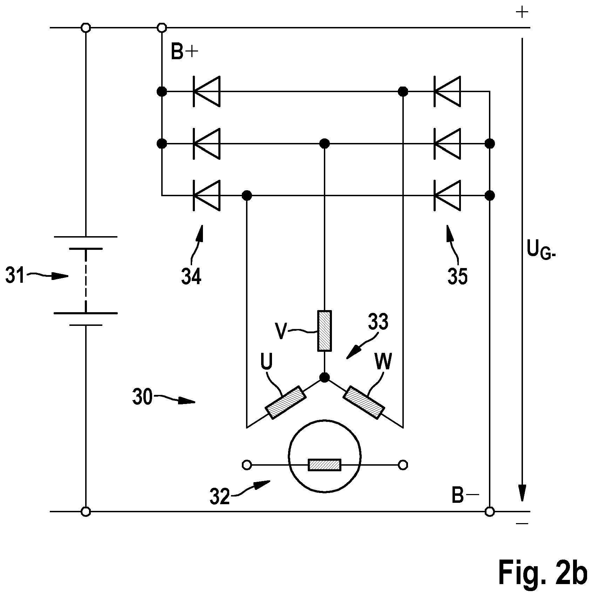

In Figur 2b ist die elektrische Maschine 30 nochmals in vergrößerter Form schematisch dargestellt. Die elektrische Maschine 30 weist einen eine Welle 17 aufweisenden Rotor 32 mit einer Erregerwicklung und einem Stator 33 mit Ständerwicklung auf. Es handelt sich daher um eine fremderregte Maschine, wie sie insbesondere bei Kraftfahrzeugen üblich ist. Insbesondere für Krafträder, insbesondere bei Klein- und Leichtkrafträdern, werden jedoch meist Motoren mit Permanentmagneten, d. h. permanenterregte elektrische Maschine eingesetzt. Im Rahmen der Erfindung können grundsätzlich beide Arten von elektrischen Maschinen verwendet werden, wobei insbesondere das erfindungsgemäße Verfahren nicht von der Verwendung der jeweiligen Art der elektrischen Maschine - permanenterregte elektrische Maschine oder fremderregte elektrische Maschine - abhängt.

Beispielhaft ist die elektrische Maschine 30 als Drehstromgenerator ausgebildet, in welcher drei zueinander um 120° phasenverschobenen Phasenspannungssignale induziert werden. Derartige Drehstromlichtmaschinen werden üblicherweise als Generatoren in modernen Kraftfahrzeugen verwendet und sind für die Durchführung eines erfindungsgemäßen Verfahrens geeignet. Im Rahmen der Erfindung können grundsätzlich alle elektrischen Maschinen unabhängig von der Anzahl ihrer Phasen verwendet werden, wobei insbesondere das erfindungsgemäße Verfahren nicht von der Verwendung der jeweiligen Art der elektrischen Maschine abhängt.

Die drei Phasen des Drehstromgenerators 30 sind mit U, V, W bezeichnet. Über das als Plusdioden 34 und Minusdioden 35 ausgebildete Gleichrichtelement, werden die an den Phasen abfallenden Spannungen gleichgerichtet. Zwischen den Polen B+ und B- liegt somit eine Generatorspannung $U_G$, bei welcher der Minuspol auf Masse liegt, an. Von einem derartigen Drehstromgenerator 30 werden beispielsweise eine Batterie B bzw. andere Verbraucher innerhalb des Bordnetzes 110 versorgt.

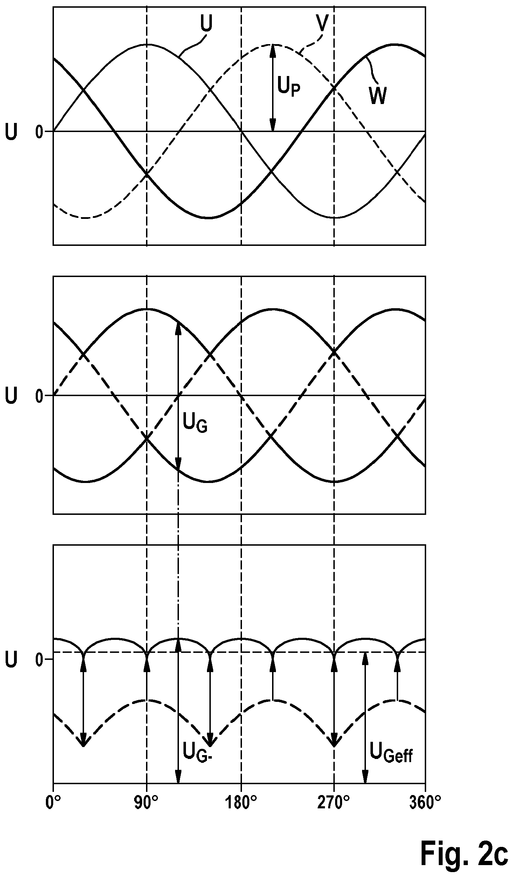

In Figur 2c sind drei Diagramme dargestellt, die die zugehörigen Spannungsverläufe gegenüber dem Drehwinkel des Rotors 32 der elektrischen Maschine 30 zeigen. Im oberen Diagramm sind die Spannungsverläufe an den Phasen U, V, W und die zugehörige Phasenspannung $U_P$ eingetragen. Allgemein versteht sich, dass die in diesem Diagramm und in den nachfolgenden Diagrammen angegebenen Zahlen und Wertebereiche lediglich exemplarisch sind, und daher die Erfindung im Grundsatz nicht beschränken.

Im mittleren Diagramm ist die Generatorspannung $U_G$, die durch die Hüllkurven der positiven und negativen Halbwellen der Spannungsverläufe U, V, W gebildet wird, gezeigt.

Im unteren Diagramm ist schließlich die gleichgerichtete Generatorspannung $U_{G-}$ (vgl. Figur 2a), zusammen mit dem Effektivwert $U_{Geff}$ dieser Generatorspannung $U_{G-}$, die zwischen B+ und B- anliegen, gezeigt.

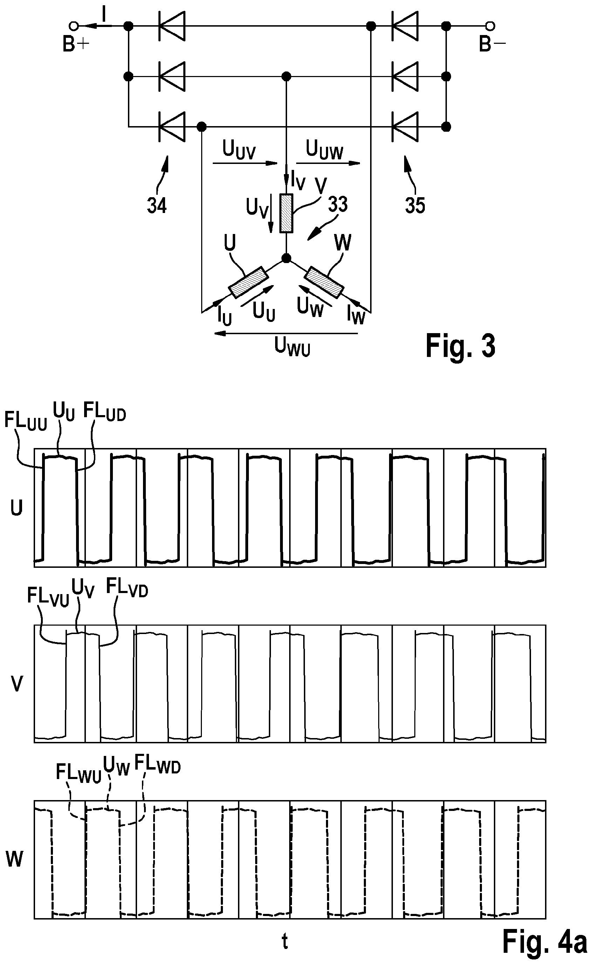

In Figur 3 ist schematisch der Stator 33 mit den Phasen U, V, W, sowie den Plusdioden 34 und Minusdioden 35 aus Figur 2b gezeigt. Grundsätzlich versteht sich, dass die hier abgebildeten Gleichrichterelemente in Form von Plusdioden 34 und Minusdioden 35 im Falle eines aktiven Gleichrichters auch als Transistoren, insbesondere MOSFETs (Metall-Oxid-Halbleiter-Feldeffekttransistor), ausgebildet sein können (nicht dargestellt). Zudem ist die im Folgenden benutzte Nomenklatur der auftretenden Spannungen und Ströme dargestellt.

$U_U$, $U_V$, $U_W$ bezeichnen alternativ die Phasenspannungen der zugehörigen Phasen U, V, W, wie sie zwischen einem Außenleiter und dem Sternpunkt des Stators 33 abfallen. $U_{UV}$, $U_{VW}$, $U_{WU}$, bezeichnen die Spannungen zwischen zwei Phasen bzw. deren zugehörigen Außenleitern.

$I_U$, $I_V$, $I_W$ bezeichnen die Phasenströme vom jeweiligen Außenleiter einer Phase U, V, W zum Sternpunkt. I bezeichnet den Gesamtstrom aller Phasen nach der Gleichrichtung.

In Figur 4a sind nun drei Phasenspannungen Uu, Uv, $U_W$ mit Potentialbezug auf B- in drei Diagrammen gegenüber der Zeit dargestellt, wie sie in einem Generator mit einem Außenpolläufer mit sechs Permanentmagneten auftreten. Diese Darstellung einer elektrischen Maschine 30, mit einer dreiphasigen Statorwicklung 33 ist lediglich beispielhaft zu sehen, wobei grundsätzlich, ohne Beschränkung der Allgemeinheit, das erfindungsgemäße Verfahren auch auf einem Generator mit einer entsprechend bedarfsgerechten Anzahl an Phasen oder Permanentmagneten oder Erreger-Spulen ausführbar ist. Ebenfalls können statt einer Stern-Verschaltung der Stator-Spulen auch eine Dreiecks-Verschaltung oder weitere Verschaltungsweisen gewählt werden.

Bei einer elektrischen Maschine 30 mit Stromabgabe, ist der Verlauf der Phasenspannungen $U_U$, $U_V$, $U_W$ in erster Näherung rechteckförmig. Dies erklärt sich insbesondere dadurch, dass durch die Generatorspannung entweder die Plus- oder die Minusdioden in Flussrichtung leiten, und daher entweder in etwa 15-16 Volt (Batterieladespannung bei 12V Bleisäure-Akkumulator und Spannung an Plusdioden), oder Minus 0,7-1 Volt (Spannung an Minusdioden), gemessen wird. Bezugspotential der Messung ist jeweils Masse. Es können auch andere Bezugspotentiale wie zum Beispiel der Sternpunkt des Stators gewählt werden. Diese ergeben abweichende Signalverläufe ändern jedoch nicht die auswertbaren Informationen, deren Gewinnung und Auswertung.

Grundsätzlich können die Phasensignale (Uu, Uv, Uw, $I_U$, $I_V$, $I_W$) auf verschiedene Weise gewonnen werden. Möglich ist beispielsweise eine Ermittlung der Phasenspannungen gegeneinander (Uuv, Uuw, Uwu), eine Ermittlung der Phasenspannungen über die Dioden eines angeschlossenen Gleichrichters gegen dessen Ausgangsklemmen (B+, B-), sofern der Stator der elektrischen Maschine in Sternschaltung mit abgreifbarem Sternpunkt ist, eine Betrachtung der Ausgangsspannung der Stränge gegen den Sternpunkt (Uu, Uv, Uw) oder eine vergleichbare Auswertung der Phasenströme.

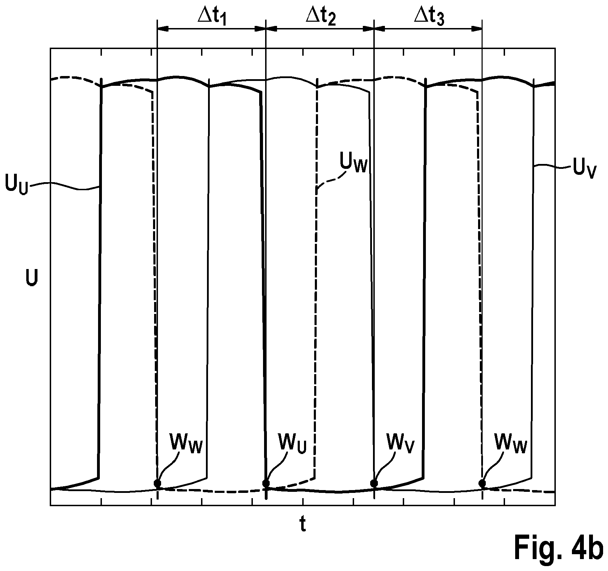

In Figur 4b sind die Phasenspannungen Uu, Uv, Uw aus Figur 4a in einem Diagramm zusammen aufgetragen. Hierbei ist deutlich der gleichmäßige Phasenversatz zu erkennen.

Während einer vollen Umdrehung des Rotors 32 der elektrischen Maschine 30, werden die Spannungssignale durch sechs Magnete (insbesondere Permanentmagnete), die sogenannten Polpaare, sechs Mal wiederholt. Dementsprechend treten pro Phase, d. h. pro Phasenspannung Uu, Uv, Uw pro Umdrehung des Rotors 32 sechs fallende Flanken $FL_D$ und sechs steigende Flanken FLu (für die jeweiligen Phasen FLuu, FLvu, FLwu und $FL_{UD}$, $FL_{VD}$, $FL_{WD}$) auf.

Diese Flanken legen einen Winkelabschnitt fest, nämlich genau den Winkelabschnitt, der durch die Magnete entlang des radialen Umfangs des Stators abgedeckt ist. Demnach lässt sich bei Erkennen der jeweiligen Flanken FLu, bzw. $FL_D$, bei Kenntnis eines absoluten Bezugspunkts pro Umlauf, der beispielsweise anhand eines Referenzmagneten mit von den sonstigen Magneten abweichender Charakteristik der Phasenspannung Uu, Uv, $U_W$ gekennzeichnet ist, ermittelt werden.

Mit geeigneten Mitteln können nun sowohl die fallenden Flanken $FL_D$ als auch die steigenden Flanken FLu erkannt werden. Beispielsweise kann für jede Phasenspannung mittels eines sogenannten Schmitt-Triggers ein TTL-Signal generiert und an ein Steuergerät übermittelt werden. Die benötigten Schmitt-Trigger können entweder im Steuergerät oder in der Steuerelektronik, beispielsweise einem Steuergerät, einem Regler für die Batteriespannung und/oder im Fall eines aktiven Gleichrichters, im jeweiligen Generatorregler integriert oder diesen auch extern zugeordnet sein. Die einzelnen TTL-Signale können insbesondere für den Fall der Verwendung eines Steuergerät, insbesondere eines Motorsteuergeräts 122 (vgl. Figur 2a), über je eine Leitung, oder durch eine vorgelagerte Kombinationselektronik oder anderes geeignet zusammengefasst, über nur eine Datenleitung 124 (vgl. Figur 2a) übermittelt werden.

In Figur 4b sind den Enden der jeweiligen fallenden Flanken der Phasenspannung Uu, Uv, Uw jeweils Werte Wu, Wv, Ww zugeordnet, die auch als $W_{Ud}$, $W_{Vd}$, $W_{Wd}$ bezeichnet werden. Gleichermaßen können auch den steigenden Flanken FLu entsprechende Werte $W_{Uu}$, $W_{Vu}$, $W_{Wu}$ zugeordnet werden. Diese Werte können der Erkennung einer Drehwinkellage $\alpha_1$ des Rotors 32 bzw. einem durch die Polpaare des Stators 33 festgelegten Winkelinkrements dienen. Auch eine Erkennung der Drehwinkellage $\alpha_1$ des Rotors 32 anhand der Plateaubereiche der Phasensignale oder anderen Bereichen dazwischen ist möglich. Gleichermaßen können die Werte auch dazu genutzt werden, anhand von Zeitdifferenzen $\Delta t_1$, $\Delta t_2$, $\Delta t_3$, die Drehzahl des Generators zu ermitteln.

Hierbei treten bei einer gleichmäßigen Anordnung der sechs Permanentmagnete in der elektrischen Maschine 30, insgesamt 18 fallende Flanken FLd und somit 18 zugehörige Werte pro Umdrehung in jeweils gleichen Abständen zueinander auf. Während eine Zeitdifferenz $\Delta t_1$, $\Delta t_2$, oder $\Delta t_3$ wird somit ein Winkel 360°/18 = 20° überstrichen. Wie bereits eingangs erwähnt, kann dies auch zur Erkennung der Drehwinkellage $\alpha_1$ des Rotors 32 herangezogen werden, wobei die beispielhaft ermittelten 20° das detektierbare Winkelinkrement darstellt. Zudem lässt sich hieraus auch die Winkelgeschwindigkeit $\omega_i$ ermitteln. Diese ergibt sich aus $\omega_i = 20°/\Delta t_i$ und die dazugehörige Drehzahl $n_i$ aus $n_i = \omega_i/360°\cdot60s/min$ in Umdrehungen pro Minute.

Es versteht sich grundsätzlich, dass alternativ zu den fallenden Flanken $FL_D$ auch die steigenden Flanken zur Ermittlung der Drehwinkellage $\alpha_1$ des Rotors 32 als auch zur Ermittlung der Momentandrehzahl $n_{Gen}$ der elektrischen Maschine 30 verwendbar sind. Durch die doppelte Anzahl an Werten pro Umdrehung, ergibt sich dementsprechend eine höhere Auflösung, sowohl der Drehwinkellage $\alpha_1$ des Rotors 32, als auch der Drehzahl $n_{Gen}$. Zudem können die Flanken der Phasen auf vielfältige weitere Art und Weise ausgewertet werden, beispielsweise durch die zeitlichen Abstände der steigenden Flanken FLu und fallenden Flanken $FL_D$ jeweils der gleichen Phasen oder von den jeweiligen Phasen zueinander oder durch den zeitlichen Abstand von steigenden Flanken FLu bzw. fallenden Flanken $FL_D$ der gleich Phase, oder aller Phasen zusammen.

Neben den aufsteigenden Flanken FLu und abfallenden Flanken $FL_D$ können für eine verbesserte Auflösung der Ermittlung der Drehwinkellage $\alpha_1$ des Rotors 32 bzw. einer Drehzahlerkennung $n_{Gen}$, auch die Nulldurchgänge der Phasensignale Uu, Uv, Uw herangezogen werden.

Die tatsächliche Drehwinkellage $\alpha_1$ des Rotors 32 und dessen Welle 17 und damit die Drehwinkelposition $\alpha$ der Kurbelwelle 17', lassen sich aus den elektrischen Signalen der elektrischen Maschine 30, insbesondere den Phasensignalen Uu, Uv, Uw, bzw. den dazugehörigen Phasenströmen $I_U$, $I_V$, $I_W$ lediglich mit unzureichender Genauigkeit bestimmen, da im Falle einer belasteten elektrischen Maschine 30 infolge des Stromflusses, es zu einem systematischen Fehler in Form eines Winkelversatzes zwischen der Phasenlage der Phasensignale Uu, Uv, Uw, bzw. $I_U$, $I_V$, $I_W$ und der tatsächlichen Drehwinkellage $\alpha_1$ des Rotors 32 kommt. Dies wird in den nachfolgenden Abbildungen näher erläutert.

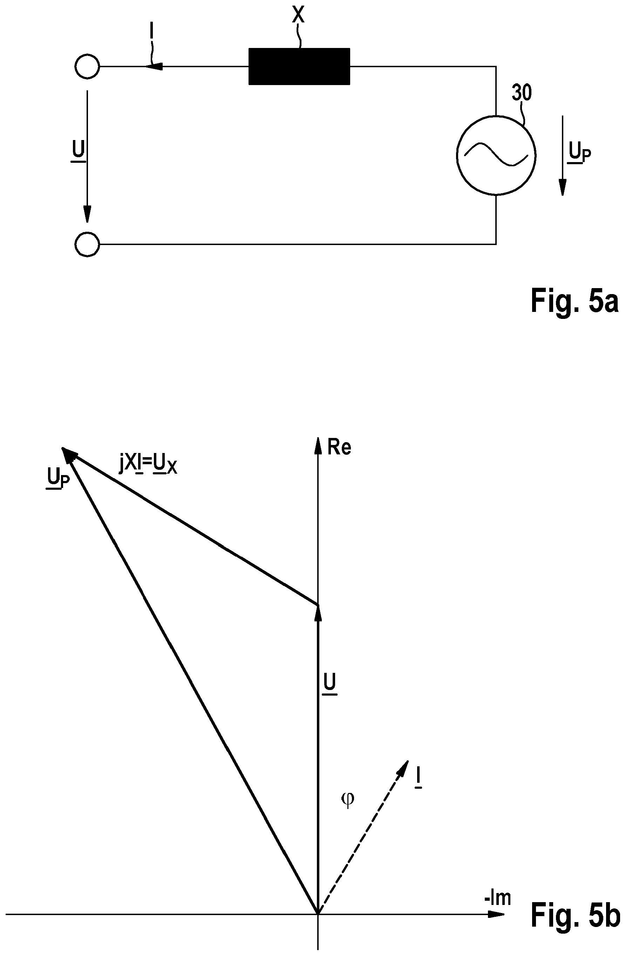

In Figur 5a ist eine schematische Darstellung eines einphasigen vereinfachten Ersatzschaltbilds einer elektrischen Maschine gezeigt, und in Figur 5b ist entsprechend die Beziehung zwischen den einzelnen Spannungen bzw. Strömen und deren relativer Phasenversatz zueinander in einem Zeigerdiagramm dargestellt. Die aus diesem Einphasenersatzschaltbild ermittelten Erkenntnisse lassen sich grundsätzlich auch auf eine mehrphasige elektrische Maschine, wie sie beispielsweise in der vorangegangenen Beschreibung gezeigt ist, übertragen. Aus dem einphasigen Ersatzschaltbild der elektrischen Maschine aus Figur 5 a) und dem zugehörigen, in Figur 5 b) gezeigten Zeigerdiagramm, lässt sich eine Spannungsgleichung für eine belastete elektrische Maschine herleiten, diese lautet wie folgt:

$$U_P = jX * I + U,$$

wobei U der Ausgangsspannung der elektrischen Maschine 30, $U_P$ der Leerlaufspannung der elektrischen Maschine ohne Belastung und $I * jX$ dem Spannungsabfall Ux, der aufgrund des Stromflusses durch die elektrische Maschine und aufgrund der Reaktanz X der elektrischen Maschine im Generator abfällt, entspricht.

Hierbei entspricht die Leerlaufspannung $U_P$ der elektrischen Maschine 30, der idealen induzierten Spannung, die mit der Drehwinkellage $\alpha_1$ des Rotors 32 bezüglich der Phase übereinstimmt. Hierbei ist entsprechend der Winkelversatz $\vartheta$, der dem Polradwinkel entspricht, gleich null. Somit spiegelt die Phasenbeziehung der Leerlaufspannung $U_P$ exakt der geometrischen Bewegung des Rotors 32 wieder und gibt somit dessen exakte Winkellage - im unbelasteten Zustand der elektrischen Maschine 30 - an.

Aufgrund der Belastung der elektrischen Maschine 30 und des daraus resultierenden Stromflusses I, eilt die Ausgangsspannung U des belasteten Generators 30 in Bezug auf deren Phase der induzierten Leerlaufspannung $U_P$ hinterher, wobei sich der Winkelversatz zwischen U und $U_P$ durch den Winkelversatz $\vartheta$, dem sogenannten Polradwinkel ergibt. Dieser ist grundsätzlich abhängig vom Spulenstrom I und ohne Kenntnis des Spulenstroms I nicht ohne weiteres berechenbar.

Zudem ergibt sich der Winkel zwischen Ausgangsspannung U und Strom I durch die angeschlossene Last und beträgt für einen rein ohmschen Verbraucher $\varphi = 0°$. Die ideale induzierte Spannung (Leerlaufspannung) $U_P$ der elektrischen Maschine, ergibt sich als Produkt aus Maschinenkonstanten, der Erregung, und der Winkelgeschwindigkeit. Im Falle einer permanenterregten Maschine ergibt sich eine konstante Erregung durch die verwendeten Permanentmagnete und damit eine zur Winkelgeschwindigkeit proportionale ideale induzierte Spannung. Aus dem Zeigerdiagramm aus Figur 5 b) ergibt sich somit für den Winkelversatz $\vartheta$:

$$(\cos (\vartheta) = (U + \sin (\varphi) * X * I) / U_P.$$

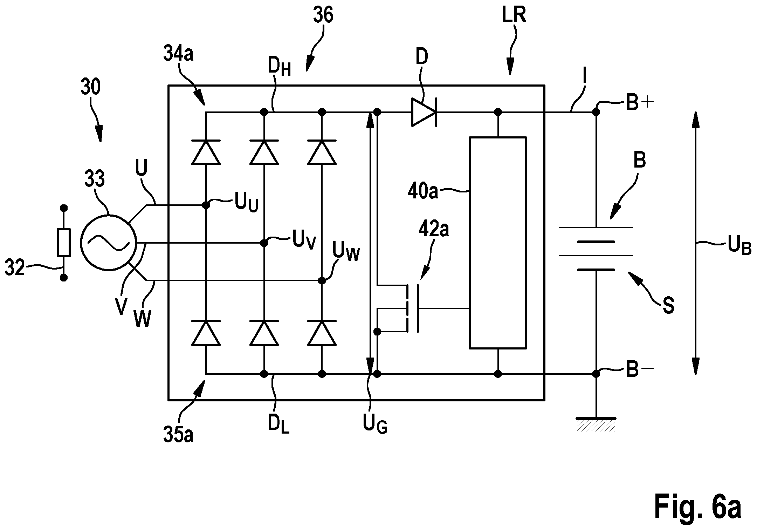

Bei Verwendung eines linear arbeitenden Spannungsreglers 40a, wie z.B. in Figur 6a dargestellt, und einer Ansteuerung eines Stellgliedes 42a für einen Spannungsreglers 40a, das beispielsweise in Form eines Leistungstransistors ausgebildet ist und im linearen Bereich (Triodenbereich) arbeitet, lässt sich die Ausgangsspannung U der elektrischen Maschine 30 nahezu konstant (in Bezug auf die Batteriespannung) einregeln. Weiterhin führt die Verwendung eines Gleichrichters 34a, 35a mit einem nachgeschalteten elektrischen Speicher S in Form einer Batterie B am Ausgang des Generators 30 näherungsweise zu einer rein ohmschen Last, auch wenn im Bordnetz kleinere Kapazitäten auftreten können. Hiermit geht entsprechend der Winkelversatz zwischen Ausgangsspannung U und Strom I, $\varphi$, gegen 0, wobei der Summand aus der zuvor genannten Formel $(\sin (\varphi) * X * I)$ ebenfalls gegen 0 geht und damit verschwindet.

Die Leerlaufspannung $U_P$ ist grundsätzlich proportional zur Drehzahl $n_{Gen}$ der elektrischen Maschine 30. Somit vereinfacht sich die zuvor genannte Formel, unter der Annahme einer im Wesentlichen konstanten Amplitude der Ausgangsspannung U und der Annahme, dass $\varphi$ gegen Null geht und somit der zweite Summand verschwindet, auf die Relation:

$$\vartheta_{aprox} = \cos^{-1}(\text{const.}/n_{Gen}),$$

wobei sich die Konstante const. im Wesentlichen aus der konstanten Ausgangsspannung U und dem konstanten und damit nicht von der Drehzahl $n_{Gen}$ abhängigen Anteil der Leerlaufspannung $U_P$ ergibt.

Wählt man eine Darstellung der Formel für $\vartheta_{aprox}$ in Abhängigkeit der Flankenzeit $t_{Gen}$ statt der Drehzahl $n_{Gen}$, ergibt sich folgender Zusammenhang von $\vartheta_{aprox}$ und $t_{Gen}$:

$$\vartheta_{aprox} = \cos^{-1}(\text{const.'} * t_{Gen}),$$

wobei const.' neben den konstanten Faktoren von oben noch den konstanten Faktor zur Berechnung der Flankenzeit $t_{Gen}$ in Sekunden aus der Drehzahl $n_{Gen}$ in Umdrehungen pro Minute (rpm) enthält.

Im relevanten Zeitbereich für typische Verbrennungsmotoren von Leerlauf bis ca. 15000 rpm lässt sich diese Beziehung näherungsweise durch eine Geradengleichung mit negativer Steigung beschreiben und ermöglicht damit eine hohe Recheneffizienz in der Anwendung. Wie bereits eingangs dargestellt, haben die angegebenen Wertebereiche lediglich erläuternden Charakter und sollen die Erfindung nicht beschränken.

Bei einer derartigen Ausgestaltung der Batterieregelung bzw. einer entsprechenden Regelung der Batteriespannung derart, dass das jeweilige Stellglied 42 im linearen Bereich betrieben wird, kann der Winkelversatz $\vartheta$ in erster Näherung auch ohne Kenntnis des Stromflusses I hinreichend genau abgeschätzt werden, was eine sehr verlässliche Ermittlung des Winkelversatzes $\vartheta$ zwischen der Phasenlage der Phasenspannungen Uu, Uv, Uw und der tatsächlichen Drehwinkellage $\alpha_1$ des Rotors 32 zulässt.

Demnach kann eine aus den Phasenspannungen Uu, Uv, Uw ermittelte Drehwinkellage $\alpha_{Phase}$ des Rotors 32 entsprechend durch den Winkelversatz $\vartheta$, der von der jeweiligen Drehzahl $n_{Gen}$ abhängt, korrigiert werden. Hieraus kann entsprechend die tatsächliche Drehwinkelposition $\alpha$ der Kurbelwelle 17 der Brennkraftmaschine bzw. der Drehwinkellage $\alpha_1$ des Rotors 32, ermittelt werden. Diese stehen im Falle einer festen Kopplung zwischen der Welle des Rotors 32 und der Kurbelwelle 17 in einem festen Verhältnis zueinander. Es gilt daher ohne Beschränkung der Allgemeinheit $\alpha = \alpha_1$, aber $\alpha_1$ ist in den Phasensignalen Uu, $U_V$, $U_W$, $I_U$, $I_V$, $I_W$ nicht mehr sichtbar, sobald ein Strom fließt.

Durch entsprechende Ermittlung der unkorrigierten Drehwinkelposition $\alpha_{Phase}$ aus zumindest einem der Phasensignalen Uu, Uv, Uw, $I_U$, $I_V$, $I_W$ und die zuvor beschriebene Ermittlung des Polradwinkels $\vartheta$, kann die tatsächliche Winkelposition $\alpha_1$ durch:

$$\alpha_1 \approx \alpha_{Phase} + \vartheta$$

in besonders guter Näherung ermittelt werden.

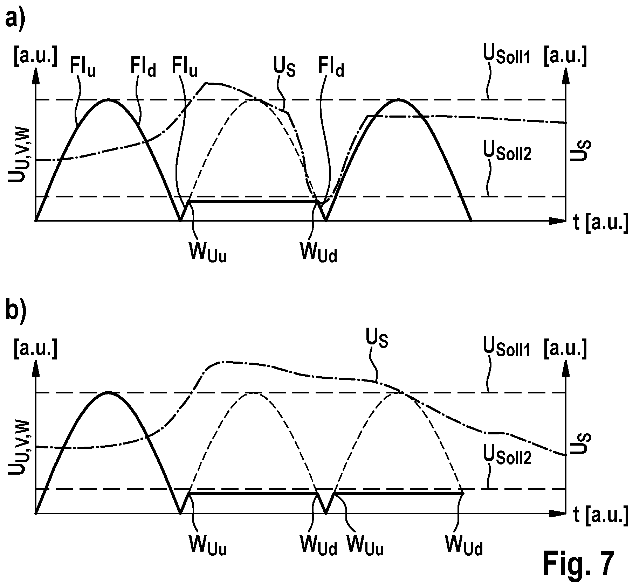

Die zuvor getroffenen Annahmen zur hochgenauen Ermittlung der Drehwinkelposition $\alpha_1$ bzw. der Drehzahl n des Rotor 32 setzt jedoch voraus, dass im Zeitbereich der Ermittlung der jeweiligen Phasensignale Uu, Uv, Uw, $I_U$, $I_V$, $I_W$ kein Eingriff zur Regelung der Spannung des elektrischen Speichers S durch den Laderegler 40 erfolgt. Dies kann sicher durch das erfindungsgemäße Verfahren gewährleistet werden, wie es im Rahmen der Figuren 7-9 genauer beschrieben wird.

In Figur 6a ist die elektrische Maschine 30 aus Figur 2b nochmals in vergrößerter Form schematisch dargestellt. Die elektrische Maschine 30 weist einen eine Welle 17 aufweisenden Rotor 32 mit einer Erregerwicklung und einem Stator 33 mit Ständerwicklung auf. Es handelt sich daher um eine fremderregte Maschine, wie sie insbesondere bei Kraftfahrzeugen üblich ist. Insbesondere für Krafträder, insbesondere bei Klein- und Leichtkrafträdern, werden jedoch meist Motoren mit Permanentmagneten, d. h. permanenterregte elektrische Maschine eingesetzt. Im Rahmen der Erfindung können grundsätzlich beide Arten von elektrischen Maschinen verwendet werden, wobei insbesondere der erfindungsgemäße Laderegler LR nicht von der Verwendung der jeweiligen Art der elektrischen Maschine - permanenterregte elektrische Maschine oder fremderregte elektrische Maschine - abhängt.

Beispielhaft ist die elektrische Maschine 30 als Drehstromgenerator ausgebildet, in welcher drei zueinander um 120° phasenverschobenen Phasenspannungssignale induziert werden. Derartige Drehstromlichtmaschinen werden üblicherweise als Generatoren in modernen Kraftfahrzeugen verwendet und sind für die Verwendung eines dem Generator nachgelagerten erfindungsgemäßen Ladereglers geeignet. Im Rahmen der Erfindung können grundsätzlich alle elektrischen Maschinen unabhängig von der Anzahl ihrer Phasen verwendet werden.

Die drei Phasen des Drehstromgenerators 30 sind mit U, V, W bezeichnet. Über das als Plusdioden $D_H$ eines ersten Pfades 34a und Minusdioden $D_L$ eines zweiten Pfads 35a ausgebildete Gleichrichtelement 36, werden die an den Phasen abfallenden Spannungen Uu, Uv, Uw gleichgerichtet. Zwischen den Polen B+ und B- liegt somit eine Generatorspannung $U_G$, bei welcher der Minuspol auf Masse liegt, an. Von einem derartigen Drehstromgenerator 30 werden beispielsweise eine Batterie B bzw. andere Verbraucher innerhalb des Bordnetzes 110 versorgt.

Zudem ist ein Laderegler LR mit einer Steuereinheit 40a vorgesehen, der von der Generatorspannung $U_G$ gespeist ist und einen Schalter 42a für den Fall einer Spannungsregelung der Batterie B derart ansteuert, dass die Pfade 34a, 35a des Gleichrichters 36 kurzgeschlossen werden. Um ein paralleles Kurzschließen der Batterie B zu verhindern, ist eine weitere Diode D vorgesehen, die der Art hinter dem Gleichrichter 36 angeordnet ist, dass ebendies verhindert wird. Im offenen Zustand des Schalters 42a wird der Gleichrichter 36 normal betrieben und beaufschlagt somit die Batterie B bzw. der elektrische Speicher S mit elektrischer Energie.

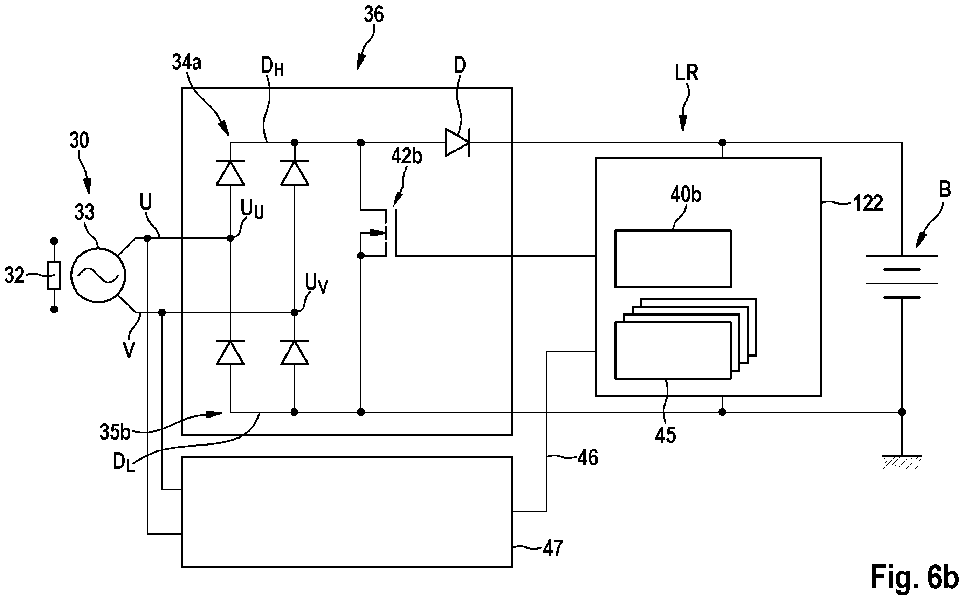

In Figur 6b ist ein weiteres Ausführungsbeispiel eines Ladereglers LR dargestellt. Gleiche bzw. gleichartige Elemente zum ersten Ausführungsbeispiel (vgl. Figur 6a) werden mit gleichen Bezugszeichen bzw. gleichen Bezugszeichen ergänzt mit einem weiteren Buchstaben b dargestellt. Auf die grundsätzliche Beschreibung bereits bekannter Elemente wird in Bezug zu dieser Ausführungsform und in Bezug zu den weiteren, noch folgenden Ausführungsformen, grundsätzlich auf die jeweiligen Beschreibungen der Ausführungsformen Bezug genommen und es werden hinsichtlich der jeweiligen Beschreibung lediglich die Veränderungen gegenüber den weiteren Ausführungsbeispielen dargestellt.

In diesem Ausführungsbeispiel wird vereinfacht von einer schematisch dargestellten, zweiphasigen elektrischen Maschine 30 mit den Phasen U und V ausgegangen, wobei an den Phasen jeweils Phasenspannungen Uu bzw. Uv anliegen. Genau genommen zeigt Figur 4a eine einphasige Maschine mit beiden herausgeführten Spulenenden. Diese besteht aus zwei Spulen, deren eine Enden herausgeführt sind und deren andere Enden verbunden werden und damit vom Aufbau her eine einphasige Maschine darstellen. Die Besonderheit an diesem Ausführungsbeispiel ist, dass die Steuereinheit 40b die den Schalter 42b zur Laderegelung und zum Kurzschluss des ersten Zweigs 34b bzw. zweiten Zweigs 35b des Gleichrichterst 36 beaufschlagt, in einem Motorsteuergerät 122 angeordnet ist. In diesem Motorsteuergerät 122 ist ferner eine Drehzahldetektionsvorrichtung 45 angeordnet. Diese weist eine Kommunikationsverbindung 46 zu einem Signalgenerator 47 auf, der mit zumindest einer der Phasen (V) verbunden ist, um die für eine Ermittlung der Drehzahl n der elektrischen Maschine 30 erforderlichen Flanken FLu bzw. FLv der Phasenspannung Uu, Uv zu ermitteln. Die grundsätzliche Ermittlung der Drehzahl n wurde Eingangs (insbesondere in Bezug zu Figur 4b) bereits beschrieben.

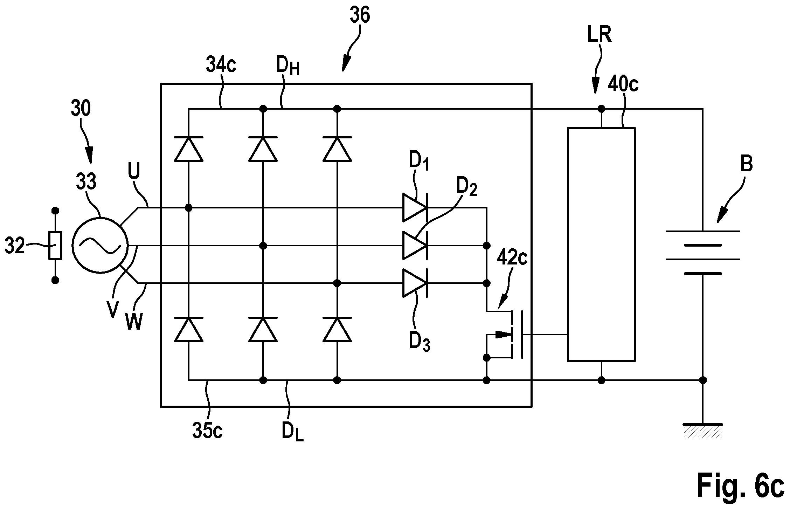

In Figur 6c ist eine weitere Ausführungsform des Ladereglers LR dargestellt. Auch hier wird der Schalter 42c wieder von der Steuereinheit 40c angesteuert, wobei bei einer Schließstellung des Schalters 42c der Schalter leitend ist und die Zweige 35c, beziehungsweise 34c (hierfür notwendige Vorrichtung nicht abgebildet) des Gleichrichters 36 entsprechend kurzschließt. Dies geschieht in diesem Fall Phasenweise, entsprechend der Phase U, V, W, da hier bei jeder Phase eine Diode D1 bis D3 zugeordnet ist. Je nach Phasenlage wird die jeweilige Phase kurzgeschlossen und es wird ein Überladen der Batterie B verhindert. Dioden $D_H$ des ersten Zweigs 34c des Gleichrichters 36 verhindern hierbei, dass bei einem Kurzschluss der jeweiligen Phase U, V, W auch die Batterie B kurzgeschlossen wird.

Ebenfalls können im oberen Pfad 34c Transistoren und dafür im unteren Pfad 35c Dioden verwendet werden. In diesem Fall erfolgt die Regelung des Stromflusses I durch Kurzschließen über den oberen Pfad 34c, während der untere Pfad 35c ein Kurzschließen der Batterie B vermeidet (entsprechende Vorrichtung nicht abgebildet).

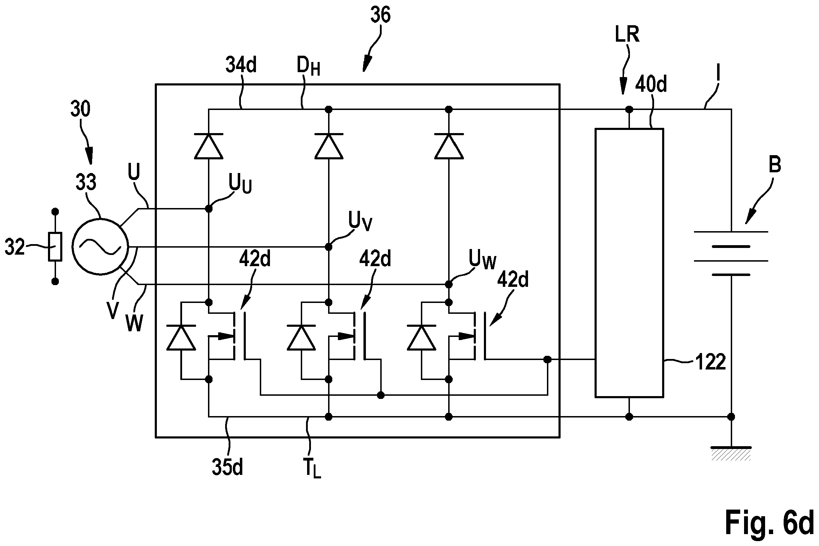

In Figur 6d ist ein weiteres Ausführungsbeispiel des Ladereglers LR beschrieben. Hierbei weist der zweite Pfad 35d des Gleichrichters 36 pro Phase, U, V, W jeweils einen Schalter 42d in Form eines Transistors auf, der in Form eines MOSFET-Transistors dargestellt ist, als Transistor mit entsprechender Inversdiode. Der Transistor hat jeweils sowohl eine gleichrichtende Funktion im unteren Pfad 35d des Gleichrichters als auch eine kurzschließende Funktion der jeweiligen Phase, der der jeweilige Transistor zugeordnet ist. Hierdurch kann durch ein entsprechendes Ansteuern des jeweiligen Transistors 42d durch die Steuereinheit 40d der Gleichrichter 36 kurgeschlossen und somit der Stromfluss I in die Batterie B unterbunden werden. Ein Kurzschließen der Batterie B wird hierbei wieder durch die Dioden $D_H$ im ersten Pfad 34d verhindert.

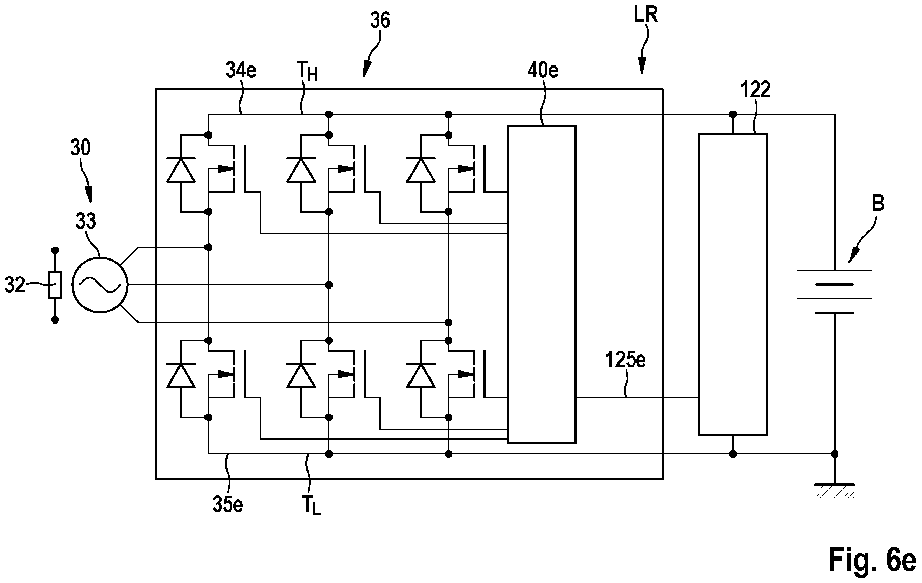

In Figur 6e ist eine weitere Ausführungsform des Ladereglers LR beschrieben. Hierbei ist sowohl der erste Pfad 34e mit Transistoren $T_H$ als auch der zweite Pfad 35e mit Transistoren TL bestückt, die den jeweiligen Phasen U, V, W zugeordnet sind. Die jeweiligen Transistoren $T_H$, $T_L$ sind von der Steuereinheit 40e jeweils entsprechend beaufschlagbar, so dass sowohl eine Gleichrichtung der Phasenspannungen $U_U$, $U_V$, $U_W$ als auch ein Kurzschließen der jeweiligen Pfade 34e, 35e zur Laderegelung der der Batterie B erfolgen kann.

Vorliegend ist die Steuereinheit 40e getrennt zum Motorsteuergerät 122 angeordnet, wobei beide miteinander mittels einer Datenverbindung 125e, zum Austausch von Daten bzw. zur Ansteuerung der Steuereinheit 40e durch das Motorsteuergerät 122 oder umgekehrt, verbunden sind. Für den Fall einer Laderegelung, wird jeweils in einem Pfad 35e, 34e die jeweiligen Transistoren $T_H$, $T_L$ durchgesteuert, so dass diese leitend werden. Zum Schutz der Batterie B sollten jeweils die korrespondierenden Transistoren $T_H$, $T_L$ des jeweils anderen Pfades in Sperrrichtung geschaltet sein, so dass ein Kurzschluss der Batterie B verhindert wird.

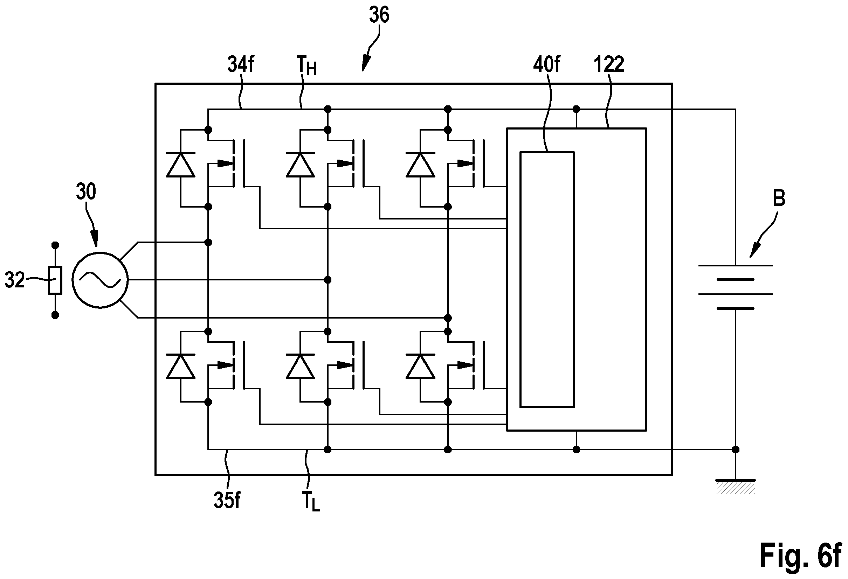

In Figur 6f ist ein weiteres Ausführungsbeispiel des Ladereglers LR dargestellt. Hierbei unterscheidet sich dieses Ausführungsbeispiel gegenüber dem in Figur 4d gezeigtes Ausführungsbeispiel lediglich dadurch, dass das Motorsteuergerät 122 als auch die Steuereinheit 40f baulich in einem gemeinsamen Gehäuse untergebracht sind, was synergetische Vorteile bietet, um entsprechend eine Brennkraftmaschine 112 bzw. die elektrische Maschine 30 anzusteuern.

Grundsätzlich versteht sich, dass die Recheneinheit 40 bzw. das Motorsteuergerät 122 entweder baulich getrennt oder gemeinsam in einem gemeinsamen Gehäuse untergebracht sein können.

In Figur 7a und b ist die Regelung einer Betriebsspannung Us eines elektrischen Speichers S gemäß einem ersten (Figur 7a) und gemäße einem alternativen zweiten (Figur 7b) Ausführungsbeispiel gezeigt. Hierin ist in der linken Ordinate eine der Phasenspannungen $U_{U,V,W}$ in der rechten Ordinate die Betriebsspannung $U_S$ des elektrischen Speichers S und auf der Abszisse die Zeit in beliebigen Einheiten aufgetragen. Ferner ist gestrichelt ein oberer Schwellwert $U_{Soll1}$ der Betriebsspannung Us des elektrischen Speichers und ein unterer Schwellwert $U_{Soll2}$ dargestellt, bei deren Erreichen bzw. Unter- und/oder Überschreiten eine entsprechende Spannungsregelung durch den Spannungsregler LR bzw. 40 (vgl. Figur 6a bis f) eingeleitet wird.

Die Phasenspannung $U_{U,V,W}$ ist als durchgezogene Linie und die Betriebsspannung $U_S$ des elektrischen Speichers S ist als Strichpunktstrichlinie im Diagramm dargestellt. Diese Beschreibung der Diagramme aus Figur 7 ist den Diagrammen aus Figur 8a, b und 9 ähnlich, weswegen hierbei generell auch auf diese Abbildungen Bezug genommen wird. Es versteht sich grundsätzlich, dass die Auswahl der hier dargestellten Phasenspannung Uu lediglich exemplarisch als Spannung einer einphasigen elektrischen Maschine oder Spannung einer beispielhaften Phase einer mehrphasigen Maschine erfolgt ist, wobei die Darstellung des erfindungsgemäßen Verfahrens auch an weiteren Phasen einer mehrphasigen elektrischen Maschine, wie auch einer Kombination der Auswertung der jeweiligen Phasen miteinander erfolgen kann.

In Figur 7a ist zu sehen, dass nach dem ersten Auftreten einer Halbwelle einer Phasenspannung mit einer aufsteigenden Flanke Flu und einer abfallenden Flanke $FI_D$ die Betriebsspannung $U_S$ des elektrischen Speichers S den oberen Schwellwert $U_{Soll1}$ überschreitet. Ferner ist nach der ersten Halbwelle der Ansatz einer weiteren Flanke $FI_U$ zu erkennen, die durch den charakteristischen Wert $W_{Uu}$ der Phasenspannung $U_U$ erkannt wird. Da anhand des charakteristischen Werts $W_{Uu}$ die aufsteigende Flanke $FI_U$ der Phasenspannung sicher erkannt wird, kann nach Erreichen des Werts $W_{Uu}$ ein Regeleingriff mittels des Ladereglers 40 des elektrischen Speichers S erfolgen, wodurch insbesondere die Phasenspannung $U_U$ begrenzt und hierdurch ein Aufladen des elektrischen Speichers S zumindest aus dieser Phase $U_U$ unterbunden wird. Bis zum Erreichen des nächsten charakteristischen Werts $W_{UD}$, der mit einer abfallenden Flanke $FI_D$ assoziiert ist, wird der Regeleingriff des Reglers 40 wieder gelöst, da die Betriebsspannung Us des elektrischen Speichers S wieder unterhalb des oberen Schwellwerts $U_{Soll1}$ verläuft. Der weitere Schwellwert $U_{Soll2}$ gibt den unteren Toleranzbereich der Betriebsspannung $U_S$ des elektrischen Speichers S an, bei dem erneut ein Reglereingriff erfolgt und der elektrische Speicher S wieder geladen wird.

Wie in Figur 7a zu sehen ist, ist für die Regulierung der Betriebsspannung $U_S$ des elektrischen Speichers S der Zeitraum zwischen Auftreten $W_{Uu}$ für die steigende Flanke und $W_{UD}$ für die abfallende Flanke der zweiten Halbwelle der Phasenspannung $U_U$ ausreichend. In Figur 7b ist hingegen ein Szenario abgebildet, dass dem in Figur 7a gezeigten Szenario ähnlich ist, wobei jedoch der Reglereingriff über die zweite und dritte Halbwelle der Phasenspannung $U_U$ gehalten wird, um die Betriebsspannung $U_S$ des elektrischen Speichers entsprechend derart anzupassen, dass dieser wieder unter den Sollwert $U_{Soll1}$ absinkt. Im Übrigen ist in den Figuren 7 bis 9 die zu erwartende Halbwelle der Phasenspannung Uu die durch den entsprechenden Regeleingriff des Ladereglers 40 unterdrückt wird, gestrichelt dargestellt.

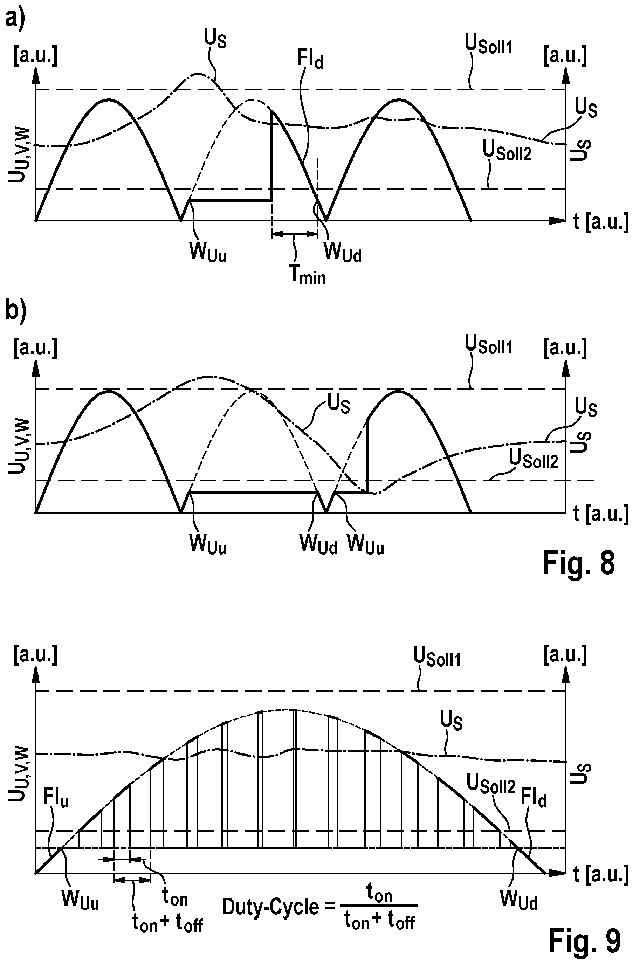

Ein weiteres Szenario einer Spannungsregelung der Betriebsspannung Us des elektrischen Speichers S ist in Figur 8a und b dargestellt. In Figur 8a und b ist ein dynamisches Verhalten des Spannungsreglers 40 bzw. dessen Ansteuerung gezeigt, bei dem der Regeleingriff zur Regelung der Betriebsspannung Us des elektrischen Speichers S mit der Detektion einer Flanke mittels des Werts $W_{Uu}$ beginnt, also getriggert durch eine entsprechende Flanke, wobei der Regeleingriff durch den Regler 40 wieder gelöst wird, sobald die Batteriespannung innerhalb des gewünschten Bereichs zwischen $U_{Soll1}$ und $U_{Soll2}$ (vgl. Figur 8a) oder, wie in Figur 8b gezeigt, die Laderegelung durch den Laderegler 40 dann wieder aktiviert wird, wenn die Betriebsspannung Us des elektrischen Speichers S bereits wieder unter den Sollwert $U_{Soll2}$ abgesunken ist. Auch hier erfolgt die Laderegelung mittels des Ladereglers 40 flankengetriggert durch die Erkennung des mit der jeweiligen Flanke assoziierten Werts $W_{Uu}$ wobei hierbei stets eine sichere Ermittlung der Drehwinkelposition des Rotors 32 der elektrischen Maschine 30 bzw. deren Drehzahl N gewährleistet ist. In Figur 8a wird ferner ein zeitlicher Mindestabstand $T_{min}$ zur nächsten Flanke $FI_D$ berücksichtigt. Hierbei ist gewährleistet, dass bei Erkennen des mit der nächsten abfallenden $FI_D$ assoziierten Werts $W_{UD}$ der Phasenspannung $U_U$, diese bereits einen stationären Wert eingenommen hat. Durch eine entsprechende Wahl des zeitlichen Abstands $T_{min}$ kann somit sichergestellt werden, dass die Spannungsflanke nicht in einem transienten sondern in einem tatsächlich eingeschwungenen stationären Zustand bestimmt wird, wodurch eine exakte Ermittlung der Drehwinkelposition des Rotors 32 bzw. dessen Drehzahl n gewährleistet ist. Um sicher zu stellen, dass ein eingeschwungener Zustand vorliegt, wird bei Unterschreiten des zeitlichen Mindestabstands $T_{min}$ wie in Figur 8b gezeigt, der Regeleingriff des Reglers 40 erst wieder nach Detektion der darauffolgenden nächsten Flanke bzw. Unterschreiten des entsprechenden Betriebsspannungssollwerts $U_{Soll2}$ gelöst.

In einer weiteren alternativen Ausführungsform des Ansteuerverfahrens des Ladereglers 40, wie er in Figur 9 dargestellt ist, wird der Stromfluss I in den elektrischen Speicher S durch eine zeitlich getaktete Ansteuerung des Ladereglers 40 unterbunden bzw. aktiviert. Dieser getaktete Betrieb erfolgt vorzugsweise innerhalb einer Halbwelle, so dass sowohl die aufsteigende Flanke Flu, als auch die abfallende Flanke $FI_D$ durch ihre charakteristischen Werte $W_{Uu}$ und $W_{UD}$ zur exakten Ermittlung der Winkelposition des Rotors 32 bzw. dessen Drehzahl n ermittelbar sind. Da die PWM-Zeitperiode zudem viel kleiner ist, als die Zeitkonstante der elektrischen Maschine, ist der Zeitpunkt des Schaltens in Relation zur Ermittlung der jeweiligen Werte nicht mehr von großer Bedeutung, weshalb eine Beachtung des Phasensignals für die Schaltvorgänge nicht mehr zwingend erfolgen muss. Die hier vorliegende Betriebsspannung Us des elektrischen Speichers S ist wie abgebildet nahezu konstant. Grundsätzlich kann je nach Wahl der aktiven Zeiten $t_{On}$ des Reglers, in dem eine Strombeaufschlagung des elektrischen Speichers S erfolgt, bzw. der deaktivierten Zeiten toff, in denen keine Strombeaufschlagung des elektrische Speichers S erfolgt, die Strombeaufschlagung der Batterie eingestellt werden. Die relevante Stellgröße ist hierbei der sogenannte Duty-Cycle, der als Verhältnis zwischen den An- bzw. Auszeiten der Regelung durch den Laderegler 40 wie folgt gegeben ist:

$$Duty - Cycle = \frac{T_{on}}{T_{on} + T_{off}}$$

Eine typische Frequenz einer entsprechend getakteten Beaufschlagung des Reglers 40, die mittels einer typischen Pulsweitenmodulation (PWM) erfolgen kann, liegt im Bereich zwischen 10 und 100 kHz, vorzugsweise 20 kHz. Grundsätzlich ist die Frequenz jedoch ausreichend groß zu wählen, so dass auch für hohe Drehzahlen n noch ausreichend viele Schaltvorgänge zwischen zwei Spannungsflanken untergebracht werden können. Die Frequenz wird jedoch vorzugsweise so gewählt, dass sie nicht Wesentlich zu einer für einen Anwender störend warnehmbaren Geräuschbeeinträchtigung beiträgt.

Unter der Annahme, dass die Trägheit der elektrischen Größen der elektrischen Maschine 30 größer als die Frequenz der Pulsweitenmodulation ist, stellt sich ein vergleichbares Verhalten des Systems insbesondere in Bezug auf Ermittlung des Polradwinkels θ ein, wie sie im Zusammenhang des linearen Reglers (abgebildet in Figur 6a), dargestellt ist. Die Abschätzung des Polradwinkels bzw. hiermit auch die Abschätzung der Winkelposition α des Rotors 32 kann somit mittels einer einzigen Kennlinie bzw. eines Kennfeldes, bei dem der Polradwinkel über den Eingangsgrößen Duty-Cycle und Drehzahl dargestellt ist, wie bei einem linearen Regler erfolgen. Wie bereits erwähnt, kann somit der Vorteil einer optimalen Spannungsregelung der Betriebsspannung $U_s$ des elektrischen Speichers S durch eine entsprechende Wahl der Ansteuerfrequenz der Pulsweitenmodulation sowie der Pulsweite, die durch den Duty-Cycle gegeben sind, einerseits, als auch eine sichere Detektion der Flanken durch die charakteristischen Werte $W_{Uu}$ und $W_{UD}$, andererseits, gewährleistet werden, die für eine Ermittlung der Sekundärgrößen der Polradspannung bzw. der Drehwinkellage des Rotors 32 und dessen Drehzahl erforderlich sind.

Grundsätzlich versteht sich, dass die Sollwerte $U_{Soll1}$ bzw. $U_{Soll2}$ der Betriebsspannung $U_S$ des elektrischen Speichers S von verschiedenen Arbeitspunkten bzw. der Motordrehzahl der elektrischen Maschine abhängig gemacht werden können. Weiterhin können die Sollwerte $U_{Soll1, Soll2}$ der Betriebsspannung $U_S$ auch von Arbeitspunkten der Brennkraftmaschine wie entsprechenden Lasten oder des Gemisches an Kraftstoff zu Verbrennungsluft (Lambda) abhängig gemacht werden.

Darüber hinaus kann durch eine hochgenaue Ermittlung der Drehwinkellage θ des Rotors 32 auch eine entsprechende Regelung, die vorzugsweise durch Kurzschluss bzw. durch Lastfreistellen des Generators erfolgt (vgl. Figuren 6a bis f) bewirkt werden, um beispielsweise in Bereichen, in denen eine hochaufgelöste Drehzahl n bzw. eine Bestimmung der Drehwinkellage θ des Rotors 32 erforderlich ist, kein Regeleingriff vorgenommen wird. Auch in Bereichen, in denen eine Zündung der Brennkraftmaschine bzw. ein Einspritzvorgang in die Brennkraftmaschine erfolgt, die wiederum empfindlich von einer Betriebsspannung $U_S$ des elektrischen Speichers abhängen, kann ein Ausregeln des elektrischen Speichers S von der elektrischen Maschine 30 unterbunden werden, um hierdurch eine entsprechende Einspritzung bzw. eine Zündung durch eine Veränderung der Betriebsspannung $U_S$ nicht zu stören. Weiter kann, um eine möglichst gute Bestimmung der hochaufgelösten Drehzahl n der elektrischen Maschine 30 bzw. deren Drehwinkellage θ zu gewährleisten, der Reglereingriff über einen konstanten Winkelbereich bezüglich der Nulllage des Rotors erfolgen, wodurch stets eine hochgenaue Ermittlung der Drehwinkelposition θ bzw. der Drehzahl N möglich ist.

## Patentansprüche

1. Verfahren zum Betreiben eines Ladereglers (LR) für einen elektrischen Speicher (S), insbesondere einer Batterie (B) eines Fahrzeugbordnetzes (100), welcher mit einer an eine Brennkraftmaschine (112) direkt oder übersetzt koppelbaren elektrischen Maschine (30), umfassend einen Rotor (32), einen Stator (33) mit zumindest einer Phasensignale (Uu, Uv, Uw, $I_U$, $I_V$, $I_W$) erzeugenden Phasenwicklung (U, V, W), wobei die Phasensignale zur Ermittlung der Drehzahl oder der Drehwinkelposition erfasst werden, mit elektrischer Energie beaufschlagbar ist, wobei zumindest ein Wert einer Phasenspannung (Wuu, $W_{Ud}$, $W_{Vu}$, $W_{Vd}$, Wwu, $W_{Wd}$), der jeweils wenigstens einmal pro Umdrehung des Rotors (32) auftritt und durch zumindest eine aufsteigende Flanke ($Fl_{Uu}$, $Fl_{Vu}$, $Fl_{Wu}$) des Phasensignals (Uu, Uv, Uw, $I_U$, $I_V$, $I_W$) oder durch eine abfallende Flanke ($Fl_{Ud}$, $Fl_{Vd}$, $Fl_{Wd}$) des Phasensignals (Uu, Uv, Uw, $I_U$, $I_V$, $I_W$) getriggert ist, erfasst wird, wobei nach Erreichen oder Überschreiten eines ersten Sollwerts ($U_{soll1}$) der Betriebsspanung $U_S$ des elektrischen Speichers (S) der Laderegler (LR) derart angesteuert wird, dass nach dem Auftreten des zumindest einen Werts (Wuu, $W_{Ud}$, Wvu, $W_{Vd}$, Wwu, $W_{Wd}$) bei der nächsten aufsteigenden Flanke ($FI_{Uu}$, $FI_{Vu}$, $FI_{Wu}$) ein Stromfluss (I) von der elektrischen Maschine (30) in den elektrischen Speicher (S) unterbunden oder freigegeben wird, **dadurch gekennzeichnet, dass** der Stromfluss (I) nach Auftreten des zumindest einen Werts der Phasenspannung (Wuu, $W_{Ud}$, Wvu, $W_{Vd}$, Wwu, $W_{Wd}$) solange unterbunden wird, bis zumindest ein weiterer Wert der Phasenspannung ($W_{Uu}$, $W_{Ud}$, Wvu, $W_{Vd}$, Wwu, $W_{Wd}$), der durch eine folgende aufsteigende Flanke ($FI_{Uu}$, Flvu, $FI_{Wu}$) des Phasensignals (Uu, Uv, Uw, $I_U$, $I_V$, $I_W$) oder durch eine abfallende Flanke ($FI_{Ud}$, $FI_{Vd}$, $FI_{Wd}$) des Phasensignals (Uu, Uv, Uw, $I_U$, $I_V$, $I_W$) getriggert ist, erkannt wird.

2. Verfahren nach Anspruch 1, wobei der Stromfluss (I) von der elektrischen Maschine (30) in den elektrischen Speicher (S) solange unterbunden wird, bis ein weiterer Sollwert ($U_{soll2}$) des elektrischen Speichers (S) erreicht oder unterschritten wird.

3. Verfahren nach zumindest einem der vorstehenden Ansprüche, wobei der erste Sollwert ($U_{soll1}$) und/oder der weitere Sollwert ($U_{soll2}$) des elektrischen Speichers (S) abhängig zur Drehzahl (n) der elektrischen Maschine (30) vorgegeben werden.

4. Verfahren nach zumindest einem der vorstehenden Ansprüche, wobei der erste Sollwert ($U_{soll1}$) und/oder der weitere Sollwert ($U_{soll2}$) des elektrischen Speichers (S) abhängig von zumindest einem Arbeitspunkt der Brennkraftmaschine (112) vorgegeben werden.

5. Verfahren nach einem der vorstehenden Ansprüche, wobei während des Unterbindens des Stromflusses (I) von der elektrischen Maschine (30) in den elektrischen Speicher (S) zumindest eine der Phasenwicklungen (U, V, W) kurzgeschlossen wird oder zumindest eine der Phasenwicklungen (U, V, W) ohne Last stromfrei gestellt wird.

6. Verfahren nach einem der vorstehenden Ansprüche, wobei das Unterbinden des Stromflusses von der elektrischen Maschine (30) in den elektrischen Speicher (S) abhängig von zumindest einer Drehwinkellage ($\alpha_{Phase}$) des Rotors (32) durchgeführt wird.

7. Verfahren nach einem der vorstehenden Ansprüche, wobei ein Schaltvorgang zum Unterbinden oder Freigeben des Stromflusses (I) eingeleitet wird, wenn zumindest ein zeitlicher Mindestabstand ($T_{min}$) zu zumindest einem Wert der Phasenspannung (Wuu, $W_{Ud}$, Wvu, $W_{Vd}$, Wwu, $W_{Wd}$), derdurch eine aufsteigende Flanke ($FI_{Uu}$, Flvu, $FI_{Wu}$) des Phasensignals (Uu, Uv, Uw, $I_U$, $I_V$, $I_W$) oder durch eine abfallende Flanke ($FI_{Ud}$, $FI_{Vd}$, $FI_{Wd}$) des Phasensignals (Uu, Uv, Uw, $I_U$, $I_V$, $I_W$) getriggert ist, besteht.

8. Verfahren nach einem der vorstehenden Ansprüche, wobei ein Schaltvorgang zum Unterbinden oder Freigeben des Stromflusses (I) zeitverzögert nach Erkennen eines Werts der Phasenspannung ($W_{Uu}$, $W_{Ud}$, $W_{Vu}$, $W_{Vd}$, Wwu, $W_{Wd}$), der durch eine aufsteigende Flanke (Fluu, Flvu, $FI_{Wu}$) des Phasensignals (Uu, Uv, Uw, $I_U$, $I_V$, $I_W$) oder durch eine abfallende Flanke ($FI_{Ud}$, $FI_{Vd}$, $FI_{Wd}$) des Phasensignals (Uu, Uv, Uw, $I_U$, $I_V$, $I_W$) getriggert ist, erfolgt.

9. Verfahren nach einem der vorstehenden Ansprüche, wobei in einem ersten Modus das Auftreten eines Werts der Phasenspannung ($W_{Uu}$, $W_{Ud}$, $W_{Vu}$, $W_{Vd}$, Wwu, $W_{Wd}$), der durch eine aufsteigende Flanke (Fluu, Flvu, $FI_{Wu}$) des Phasensignals (Uu, Uv, Uw, lu, $I_V$, $I_W$) oder durch eine abfallende Flanke ($FI_{Ud}$, $FI_{Vd}$, $FI_{Wd}$) des Phasensignals (Uu, Uv, Uw, $I_U$, Iv, $I_W$) getriggert ist, erkannt wird wobei nach Erkennen des Wertes aus dem ersten Modus in einen weiteren Modus gewechselt wird, in dem ein Unterbinden oder Freigeben des Stromflusses (I) eingeleitet wird.

10. Verfahren nach einem der vorstehenden Ansprüche, wobei der Stromfluss (I) nach Auftreten des zumindest einen Werts der Phasenspannung ($W_{Uu}$, $W_{Ud}$, $W_{Vu}$, $W_{Vd}$, $W_{Wu}$, $W_{Wd}$) zeitlich getaktet, vorzugsweise mittels Puls-Weiten-Modulation getaktet, unterbunden wird.

11. Verfahren nach Anspruch 9, wobei eine zeitliche Taktung (PWM) derart gewählt wird, dass die Betriebsspannung (U) des elektrischen Speichers (S) zwischen dem ersten Sollwert ($U_{soll1}$) und dem weiteren Sollwert ($U_{soll2}$) liegt, vorzugsweise einen konstanten Wert ($U_{const}$) annimmt.

12. Verfahren nach einem der vorstehenden Ansprüche, wobei die ein oder mehreren Phasensignale (Uu, Uv, Uw, $I_U$, Iv, $I_W$) der elektrischen Maschine (30) mittels einer elektronischen Schaltung, insbesondere einem Motorsteuergerät (122) verarbeitet werden.

13. Recheneinheit, vorzugsweise ein Motorsteuergerät (122) für eine Brennkraftmaschine (12), die durch eine entsprechende integrierte Schaltung und/oder durch ein auf einem Speicher gespeichertes Computerprogramm dazu eingerichtet ist, ein Verfahren nach einem der vorstehenden Ansprüche durchzuführen.

14. Computerprogramm, umfassend Befehle, die bei der Ausführung des Programms durch eine Recheneinheit diese veranlassen, das Verfahren nach einem der Ansprüche 1 bis 11 auszuführen.

15. Maschinenlesbares Speichermedium mit einem darauf gespeicherten Computerprogramm nach Anspruch 13.

**Claims**

1. Method for operating a charging regulator (LR) for an electrical storage device (S), in particular a battery (B) of a vehicle on-board power supply (100), which can be supplied with electrical energy by means of an electric machine (30) that can be coupled to an internal combustion engine (112) in a direct or geared manner and comprises a rotor (32) and a stator (33) with at least one phase winding (U, V, W) that generates phase signals ($U_U$, $U_V$, $U_W$, $I_U$, $I_V$, $I_W$), wherein the phase signals are detected in order to ascertain the rotational speed or the rotary angle position, wherein at least one value of a phase voltage ($W_{Uu}$, $W_{Ud}$, $W_{Vu}$, $W_{VD}$, $W_{Wu}$, $W_{Wd}$), which occurs in each case at least once per revolution of the rotor (32) and is triggered by at least one rising edge ($Fl_{Uu}$, $Fl_{Vu}$, $Fl_{Wu}$) of the phase signal (Uu, Uv, Uw, $I_U$, $I_V$, $I_W$) or by a falling edge ($Fl_{Ud}$, $Fl_{Vd}$, $Fl_{Wd}$) of the phase signal ($U_U$, $U_V$, $U_W$, $I_U$, $I_V$, $I_W$), is detected, wherein, once a first setpoint value ($U_{soll1}$) of the operating voltage ($U_s$) of the electrical storage device (S) has been reached or exceeded, the charging regulator (LR) is controlled such that, following the occurrence of the at least one value ($W_{Uu}$, $W_{Ud}$, $W_{Vu}$, $W_{Vd}$, $W_{Wu}$, $W_{Wd}$) at the next rising edge ($Fl_{Uu}$, $Fl_{Vu}$, $Fl_{Wu}$), a current flow (I) from the electric machine (30) into the electrical storage device (S) is suppressed or enabled, **characterized in that** the current flow (I) is suppressed after the at least one value of the phase voltage ($W_{Uu}$, $W_{Ud}$, $W_{Vu}$, $W_{Vd}$, $W_{Wu}$, $W_{Wd}$) has occurred until at least one further value of the phase voltage ($W_{Uu}$, $W_{Ud}$, $W_{Vu}$, $W_{Vd}$, $W_{Wu}$, $W_{Wd}$), which is triggered by a subsequent rising edge ($Fl_{Uu}$, $Fl_{Vu}$, $Fl_{Wu}$) of the phase signal (Uu, $U_V$, $U_W$, $I_U$, $I_V$, $I_W$) or by a falling edge ($Fl_{Ud}$, $Fl_{Vd}$, $Fl_{Wd}$) of the phase signal ($U_U$, $U_V$, $U_W$, $I_U$, $I_V$, $I_W$), is identified.

2. Method according to Claim 1, wherein the current flow (I) from the electric machine (30) into the electrical storage device (S) is suppressed until a further setpoint value ($U_{soll2}$) of the electrical storage device (S) is reached or undershot.

3. Method according to at least one of the preceding claims, wherein the first setpoint value ($U_{soll1}$) and/or the further setpoint value ($U_{soll2}$) of the electrical storage device (S) are specified depending on the rotational speed (n) of the electric machine (30).

4. Method according to at least one of the preceding claims, wherein the first setpoint value ($U_{soll1}$) and/or the further setpoint value ($U_{soll2}$) of the electrical storage device (S) are specified depending on at least one operating point of the internal combustion engine (112).

5. Method according to one of the preceding claims, wherein, while the current flow (I) from the electric machine (30) into the electrical storage device (S) is suppressed, at least one of the phase windings (U, V, W) is short-circuited or at least one of the phase windings (U, V, W) is set without current or load.

6. Method according to one of the preceding claims, wherein the current flow from the electric machine (30) into the electrical storage device (S) is suppressed depending on at least one rotary angle position ($\alpha_{phase}$) of the rotor (32).

7. Method according to one of the preceding claims, wherein a switching process for suppressing or enabling the current flow (I) is introduced when at least one minimum time interval ($T_{min}$) exists at at least one value of the phase voltage ($W_{Uu}$, $W_{Ud}$, $W_{Vu}$, $W_{Vd}$, $W_{Wu}$, $W_{Wd}$), which is triggered by a rising edge ($Fl_{Uu}$, $Fl_{Vu}$, $Fl_{Wu}$) of the phase signal ($U_U$, $U_V$, $U_W$, $I_U$, $I_V$, $I_W$) or by a falling edge ($Fl_{Ud}$, $Fl_{Vd}$, $Fl_{Wd}$) of the phase signal ($U_U$, $U_V$, $U_W$, $I_U$, $I_V$, Iw).

8. Method according to one of the preceding claims, wherein a switching process for suppressing or enabling the current flow (I) takes place with a time delay after identification of a value of the phase voltage ($W_{Uu}$, $W_{Ud}$, $W_{Vu}$, $W_{Vd}$, $W_{Wu}$, $W_{Wd}$), which is triggered by a rising edge ($Fl_{Uu}$, $Fl_{Vu}$, $Fl_{Wu}$) of the phase signal (Uu, Uv, Uw, $I_U$, $I_V$, $I_W$) or by a falling edge ($Fl_{Ud}$, $Fl_{Vd}$, $Fl_{Wd}$) of the phase signal (Uu, Uv, Uw, $I_U$, $I_V$, $I_W$).

9. Method according to one of the preceding claims, wherein, in a first mode, the occurrence of a value of the phase voltage ($W_{Uu}$, $W_{Ud}$, $W_{Vu}$, $W_{Vd}$, $W_{Wu}$, $W_{Wd}$), which is triggered by a rising edge ($Fl_{Uu}$, $Fl_{Vu}$, $Fl_{Wu}$) of the phase signal ($U_U$, $U_V$, $U_W$, $I_U$, $I_V$, $I_W$) or by a falling edge ($Fl_{Ud}$, $Fl_{Vd}$, $Fl_{Wd}$) of the phase signal ($U_U$, $U_V$, $U_W$, $I_U$, $I_V$, $I_W$), is identified, wherein, after identification of the value from the first mode, there is a change to another mode in which suppression or enabling of the current flow (I) is introduced.

10. Method according to one of the preceding claims, wherein the current flow (I) is suppressed in a manner clocked in time, preferably by means of pulse width modulation, after the occurrence of the at least one value of the phase voltage ($W_{Uu}$, $W_{Ud}$, $W_{Vu}$, $W_{Vd}$, $W_{Wu}$, $W_{Wd}$).

11. Method according to Claim 9, wherein a temporal clock (PWM) is selected in such a way that the operating voltage (U) of the electrical storage device (S) is between the first setpoint value ($U_{soll1}$) and the further setpoint value ($U_{soll2}$), preferably assumes a constant value ($U_{const}$).

12. Method according to one of the preceding claims, wherein the one or more phase signals ($U_U$, $U_V$, $U_W$, $I_U$, $I_V$, $I_W$) of the electric machine (30) are processed by means of an electronic circuit, in particular a motor control device (122).

13. Computation unit, preferably a motor control device (122) for an internal combustion engine (12), which is set up to carry out a method according to one of the preceding claims by way of a corresponding integrated circuit and/or by way of a computer program stored on a storage device.

14. Computer program, comprising instructions which, when the program is executed by a computation unit, cause the latter to carry out the method according to one of Claims 1 to 11.

15. Machine-readable storage medium comprising a computer program according to Claim 13 stored thereon.

**Revendications**

1. Procédé permettant de faire fonctionner un régulateur de charge (LR) pour un accumulateur électrique (S), en particulier une batterie (B) d'un réseau de bord de véhicule (100), qui peut être soumis à une énergie électrique par une machine électrique (30) pouvant être accouplée directement ou par engrenage à un moteur à combustion interne (112) et comprenant un rotor (32), un stator (33) pourvu d'au moins un enroulement de phase (U, V, W) générant des signaux de phase ($U_U$, $U_V$, $U_W$, $I_U$, $I_V$, $I_W$), les signaux de phase étant détectés pour établir la vitesse de rotation ou la position d'angle de rotation, dans lequel au moins une valeur d'une tension de phase ($W_{Uu}$, $W_{Ud}$, $W_{Vu}$, $W_{Vd}$, $W_{Wu}$, $W_{Wd}$) est détectée qui apparaît respectivement au moins une fois par rotation du rotor (32) et est déclenchée par au moins un flanc montant ($Fl_{Uu}$, $Fl_{Vu}$, $Fl_{Wu}$) du signal de phase (Uu, Uv, Uw, $I_U$, $I_V$, $I_W$) ou par un flanc descendant ($Fl_{Ud}$, $Fl_{Vd}$, $Fl_{Wd}$) du signal de phase ($U_U$, $U_V$, $U_W$, $I_U$, $I_V$, $I_W$), dans lequel, lorsqu'une première valeur de consigne ($U_{soll1}$) de la tension de service $U_S$ de l'accumulateur électrique (S) est atteinte ou dépassée, le régulateur de charge (LR) est piloté de telle sorte qu'après l'apparition de ladite au moins une valeur ($W_{Uu}$, $W_{Ud}$, $W_{Vu}$, $W_{VD}$, $W_{Wu}$, $W_{Wd}$) au flanc montant suivant ($Fl_{Uu}$, $Fl_{Vu}$, $Fl_{Wu}$), un passage de courant (I) de la machine électrique (30) vers l'accumulateur électrique (S) est inhibé ou libéré, **caractérisé en ce qu'**après l'apparition de ladite au moins une valeur de la tension de phase ($W_{Uu}$, $W_{Ud}$, $W_{Vu}$, $W_{VD}$, $W_{Wu}$, $W_{Wd}$), le passage de courant (I) est inhibé jusqu'à ce qu'au moins une autre valeur de la tension de phase ($W_{Uu}$, $W_{Ud}$, $W_{Vu}$, $W_{Vd}$, $W_{Wu}$, $W_{Wd}$) soit reconnue qui est déclenchée par un flanc montant suivant ($Fl_{Uu}$, $Fl_{Vu}$, $Fl_{Wu}$) du signal de phase ($U_U$, $U_V$, $U_W$, $I_U$, $I_V$, $I_W$) ou par un flanc descendant ($Fl_{Ud}$, $Fl_{Vd}$, $Fl_{Wd}$) du signal de phase ($U_U$, $U_V$, $U_W$, $I_U$, $I_V$, $I_W$).

2. Procédé selon la revendication 1, dans lequel le passage de courant (I) de la machine électrique (30) vers l'accumulateur électrique (S) est inhibé jusqu'à ce qu'une autre valeur de consigne ($U_{soll2}$) de l'accumulateur électrique (S) soit atteinte ou soupassée.

3. Procédé selon au moins l'une des revendications précédentes, dans lequel la première valeur de consigne ($U_{soll1}$) et/ou l'autre valeur de consigne ($U_{soll2}$) de l'accumulateur électrique (S) est/sont prédéfinie(s) en fonction de la vitesse de rotation (n) de la machine électrique (30).

4. Procédé selon au moins l'une des revendications précédentes, dans lequel la première valeur de consigne ($U_{soll1}$) et/ou l'autre valeur de consigne ($U_{soll2}$) de l'accumulateur électrique (S) est/sont prédéfinie(s) en fonction d'au moins un point de fonctionnement dynamique du moteur à combustion interne (112).

5. Procédé selon l'une quelconque des revendications précédentes, dans lequel pendant l'inhibition du passage de courant (I) de la machine électrique (30) vers l'accumulateur électrique (S), au moins l'un des enroulements de phase (U, V, W) est court-circuité ou au moins l'un des enroulements de phase (U, V, W) sans charge est mis hors tension.

6. Procédé selon l'une quelconque des revendications précédentes, dans lequel l'inhibition du passage de courant de la machine électrique (30) vers l'accumulateur électrique (S) est effectuée en fonction d'au moins une position d'angle de rotation ($\alpha_{phase}$) du rotor (32).

7. Procédé selon l'une quelconque des revendications précédentes, dans lequel une opération de commutation pour inhiber ou libérer le passage de courant (I) est entamée si au moins un intervalle de temps minimal ($T_{min}$) existe par rapport à au moins une valeur de la tension de phase ($W_{Uu}$, $W_{Ud}$, $W_{Vu}$, $W_{Vd}$, $W_{Wu}$, $W_{Wd}$) qui est déclenchée par un flanc montant ($Fl_{Uu}$, $Fl_{Vu}$, $Fl_{Wu}$) du signal de phase ($U_U$, $U_V$, $U_W$, $I_U$, $I_V$, $I_W$) ou par un flanc descendant ($Fl_{Ud}$, $Fl_{Vd}$, $Fl_{Wd}$) du signal de phase ($U_U$, $U_V$, $U_W$, $I_U$, $I_V$, $I_W$).

8. Procédé selon l'une quelconque des revendications précédentes, dans lequel une opération de commutation pour inhiber ou libérer le passage de courant (I) est effectuée de façon temporisée après la reconnaissance d'une valeur de la tension de phase ($W_{Uu}$, $W_{Ud}$, $W_{Vu}$, $W_{Vd}$, $W_{Wu}$, $W_{Wd}$) qui est déclenchée par un flanc montant ($Fl_{Uu}$, $Fl_{Vu}$, $Fl_{Wu}$) du signal de phase (Uu, Uv, Uw, $I_U$, $I_V$, $I_W$) ou par un flanc descendant ($Fl_{Ud}$, $Fl_{Vd}$, $Fl_{Wd}$) du signal de phase (Uu, Uv, Uw, $I_U$, $I_V$, $I_W$).

9. Procédé selon l'une quelconque des revendications précédentes, dans lequel dans un premier mode, l'apparition d'une valeur de la tension de phase ($W_{Uu}$, $W_{Ud}$, $W_{Vu}$, $W_{VD}$, $W_{Wu}$, $W_{Wd}$) qui est déclenchée par un flanc montant ($Fl_{Uu}$, $Fl_{Vu}$, $Fl_{Wu}$) du signal de phase (Uu, Uv, Uw, $I_U$, $I_V$, $I_W$) ou par un flanc descendant ($Fl_{Ud}$, $Fl_{Vd}$, $Fl_{Wd}$) du signal de phase ($U_U$, $U_V$, $U_W$, $I_U$, $I_V$, $I_W$) est reconnue, dans lequel, après la reconnaissance de la valeur, on passe du premier mode à un autre mode dans lequel une inhibition ou une libération du passage de courant (I) est entamée.

10. Procédé selon l'une quelconque des revendications précédentes, dans lequel le passage de courant (I) après l'apparition de ladite au moins une valeur de la tension de phase ($W_{Uu}$, $W_{Ud}$, $W_{Vu}$, $W_{Vd}$, $W_{Wu}$, $W_{Wd}$) est inhibée de manière cadencée dans le temps, de préférence cadencée par modulation d'impulsions en largeur.

11. Procédé selon la revendication 9, dans lequel un cadencement dans le temps (PWM) est sélectionné de telle sorte que la tension de service (U) de l'accumulateur électrique (S) se situe entre la première valeur de consigne ($U_{soll1}$) et l'autre valeur de consigne ($U_{soll2}$), adoptant de préférence une valeur constante ($U_{const}$).

12. Procédé selon l'une quelconque des revendications précédentes, dans lequel ledit un ou les plusieurs signaux de phase ($U_U$, $U_V$, $U_W$, $I_U$, $I_V$, $I_W$) de la machine électrique (30) est/sont traité(s) au moyen d'un circuit électronique, en particulier d'un appareil de commande de moteur (122).

13. Unité de calcul, de préférence appareil de commande de moteur (122) pour un moteur à combustion interne (12), qui est conçue par un circuit intégré correspondant et/ou par un programme informatique stocké dans une mémoire pour exécuter un procédé selon l'une quelconque des revendications précédentes.

14. Programme informatique, comprenant des instructions qui lors de l'exécution du programme par une unité de calcul amène celle-ci à exécuter le procédé selon l'une quelconque des revendications 1 à 11.

15. Support de stockage lisible par machine, comprenant un programme informatique selon la revendication 13 stocké sur celui-ci.

Fig. 1

Fig. 2a

Fig. 2b

Fig. 2c

Fig. 3

Fig. 4a

Fig. 4b

X

I

$\underline{U}$

30

$\underline{U}_P$

Fig. 5a

$\underline{U}_P$

$jX\underline{I}=\underline{U}_X$

Re

$\underline{U}$

$\underline{I}$

$\varphi$

-Im

Fig. 5b

Fig. 6a

Fig. 6b

Fig. 6c

Fig. 6d

Fig. 6e

Fig. 6f

EP 3 724 988 B1

Fig. 7

a)

b)

Fig. 8

$$\text{Duty-Cycle} = \frac{t_{on}}{t_{on} + t_{off}}$$

Fig. 9

**IN DER BESCHREIBUNG AUFGEFÜHRTE DOKUMENTE**

**In der Beschreibung aufgeführte Patentdokumente**

- US 2009085352 A1
- DE 102014206173 A1
- DE 10150374 A1
- EP 0664887 B1